# EUROPÄISCHE PATENTSCHRIFT

(11) **EP 3 672 776 B1**
(45) Veröffentlichungstag und Bekanntmachung des Hinweises auf die Patenterteilung: **03.02.2021**
(21) Anmeldenummer: 18826053.3
(22) Anmeldetag: 20.12.2018
(51) Int. Cl.: B29C 45/67, B29C 45/68, F15B 15/26

(54) **FORMSCHLIESSEINHEIT FÜR EINE SPRITZGIESSMASCHINE SOWIE VERFAHREN ZUM VERRIEGELN EINES KRAFTÜBERTRAGUNGSELEMENTS**
MOULD-CLOSING UNIT FOR AN INJECTION MOULDING MACHINE, AND METHOD FOR LOCKING A FORCE TRANSMISSION ELEMENT
UNITÉ DE FERMETURE DE MOULE DESTINÉE À UNE MACHINE DE MOULAGE PAR INJECTION AINSI QUE PROCÉDÉ DE BLOCAGE D'UN ÉLÉMENT DE TRANSMISSION DE FORCE

(30) Priorität: 27.12.2017 DE 102017223822
(43) Veröffentlichungstag der Anmeldung: 01.07.2020
(73) Patentinhaber: Arburg GmbH + Co KG, 72290 Loßburg (DE)
(72) Erfinder: DUFFNER, Eberhard, 72181 Starzach (DE); BLETSCHER, Rainer, 72270 Baiersbronn (DE)
(74) Vertreter: RPK Patentanwälte Reinhardt, Pohlmann und Kaufmann Partnerschaft mbB
(86) Internationale Anmeldenummer: PCT/EP2018/086444
(87) Internationale Veröffentlichungsnummer: WO 2019/129670

(56) Entgegenhaltungen:
- EP-B1- 1 068 060
- DE-A1- 1 529 931
- DE-A1- 10 318 405
- DE-A1- 19 956 190
- DE-T2- 60 007 980
- JP-A- H01 192 519
- Formschließköpfe: "Klemmen, Antreiben und Lösen durch Hydraulikdruck, SITEMA-PowerStroke", , 31. Januar 2016 (2016-01-31), XP055262647, Gefunden im Internet: URL:http://www.sitema.de/gfx_content/pdf/d e/powerstroke/SITEMA-TI-P11-DE.pdf [gefunden am 2016-04-04]

## Beschreibung

Die Erfindung betrifft eine Formschließeinheit für eine Spritzgießmaschine zur Verarbeitung plastifizierbarer Massen wie Kunststoffe, pulverförmige oder keramische Massen nach dem Oberbegriff des Anspruches 1 sowie ein Verfahren zum Verriegeln eines Kraftübertragungselements an einer Spritzgießmaschine nach dem Oberbegriff des Anspruches 13.

Im Rahmen dieser Anmeldung werden folgende Begriffe wie folgt gebraucht:
- Unter einem "aktiv schließenden" System wird bei einer Spannzange eine System verstanden, das in einem unverformten Zustand sich in einer Position befindet, in der sich die Spannzange mit dem durch die Spannzange zu haltenden Element, das heißt im Rahmen dieser Patentanmeldung mit dem Kraftübertragungselement bzw. Holm in einer verriegelten Stellung befindet. Um ein aktiv schließendes System zu öffnen, muss die Spannzange daher radial, in der Regel nach außen, elastisch verformt werden, um außer Eingriff mit dem Übertragungselement zu gelangen.
- Umgekehrt wird unter einem "aktiv öffnenden" System ein System verstanden, das im Ruhezustand, also im unverformten Zustand Spannzange und Kraftübertragungselement nicht miteinander verriegelt. Ein derartiges System wird durch radiale elastische Verformung der Spannzange, in der Regel radial nach innen, in eine Position überführt, in der Kraftübertragungselement und Spannzange miteinander in Wirkeingriff stehen.
- Unter einer "schwimmenden Lagerung" wird eine Lagerung verstanden, bei der die gelagerten Elemente grundsätzlich in wenigstens einer Richtung, das heißt also mit wenigstens einem Freiheitsgrad beweglich z.B. durch elastische Elemente abgestützt sind. Eine derartige Lagerung ist auch dadurch zu erreichen, dass ein Element über einen Hydraulikraum oder

Zylinderraum mit dem Rest der Einheit in Verbindung steht.
- Unter "Formschluss" einer Spritzgießform wird der Zustand verstanden, in dem die auf Formträgern der Spritzgießmaschine befestigten Teile einer Spritzgießform aneinander liegen. Dies ist regelmäßig dann der Fall, wenn plastifiziertes Material in den Formhohlraum der Spritzgießform eingespritzt wird. Eine Fahrbewegung in und außer Formschluss ist damit eine Bewegung, die einem Öffnen und Schließen der Spritzgießform entspricht.
- Unter "Formhöhe" wird die Höhe der Form verstanden, die in Schließrichtung gemessen wird und dem Abstand zwischen beweglichem Formträger und stationärem Formträger bei geschlossener Spritzgießform entspricht.
- Unter einer "Formhöhenverstelleinrichtung" wird ein Mechanismus verstanden, der erforderlich ist, um eine optimale Stellung von beweglichem und stationärem Formträger bei geschlossener Spritzgießform zu erreichen. Ausgehend von dieser Stellung erfolgen die Schließbewegung und der Aufbau der Schließkraft, so dass beim Schließen der Spritzgießform die maximale Schließkraft aufgebracht werden kann. Derartige Formhöhenverstelleinrichtungen sind auch erforderlich, wenn Schließwege optimiert werden, wenn z.B. auf ein und derselben Maschine Spritzgießformen mit unterschiedlicher Formhöhe eingesetzt werden.

Aus der dem Oberbegriff der unabhängigen Ansprüche zu Grunde liegenden DE 15 29 931 A1 ist eine Formschließeinrichtung bekannt, die einen stationärer Formträger und einen beweglichen Formträger aufweist. Die Formträger spannen zwischen sich einen Formspannraum zur Aufnahme von Spritzgießformen auf. Die Spanneinrichtung weist einen Spannzylinder, einen Druckkolben und einen Spannbolzen auf. In der Ruhestellung sind vier Kipphebel in einem ringförmigen Teil gelagert, welche durch Federn nach außen gedrückt werden. Wird der Druckkolben beaufschlagt und dringt der Spannbolzen in den Spannzylinder ein, verschwenken die Kipphebel in eine Ausnehmung im Spannbolzen und verriegeln diesen. Wird Druck vom Druckbolzen genommen, verschwenken die Kipphebel unterstützt durch eine Feder wieder zurück in die Ruhestellung. Durch den Aufbau ergibt sich im weitesten Sinne eine schwimmend gelagerte Spannzange, die zur Verriegelung der Holme und Formträger in formschlüssige Wirkverbindung überführbar ist.

Aus der DE 103 18 405 A1 ist eine vergleichbare Spritzgießeinrichtung bekannt, die eine ortsfeste Formaufspannplatte und eine bewegbare Formaufspannplatte sowie Holme zum Verbinden der Formaufspannplatten aufweist. An einer der Formaufspannplatten sind translatorisch gegeneinander verschiebbare Backen von Verriegelungsvorrichtungen zum Verriegeln der Formaufspannplatte mit den Holmen vorgesehen. Mindestens ein Backen ist federbelastet oder zumindest bereichsweise mit Federn ausgebildet, wobei die Federbelastung eine Kraft in Richtung der Verriegelungsstellung der Backen ausübt.

Aus der DE 600 07 980 T2 ist eine Formschlusseinrichtung mit zwei relativ zueinander beweglichen Platten bekannt. Der Schließmechanismus umfasst ein zusammendrückbares Element, das eine Spannstange zum Greifen der Spannstange und Übertragen einer Schließkraft umgreift. Ferner ist ein Druckkolben mit einer Bohrung und einer Betätigungsfläche zur Reibbetätigung des zusammendrückbaren Elements vorgesehen. Durch die Reibbetätigung wird eine Gleitbewegung zwischen dem zusammendrückbaren Element und dem Druckkolben verhindert. Ferner ist ein Gleitkolben zum Aufbringen der Schließkraft und zur Bewirkung eines Gleitvorgangs des zusammendrückbaren Elements aus einer Anfangsstellung in eine vorgeladene Stellung vorgesehen, in der das zusammendrückbare Element durch Kontakt mit der Betätigungsfläche zusammengedrückt wird.

Aus der JP H01 192519 A ist eine Formverriegelungseinrichtung bekannt, die einen Holm als Kraftübertragungselement durch Reibungskräfte einspannt. Durch eine Keilbewegung werden gegenläufig geneigte Oberflächen dabei so miteinander verriegelt, dass eine radiale Spannkraft auf den Holm ausgeübt wird.

Aus der US 9,469,063 B2 ist eine Formschließeinrichtung bekannt, bei der ein stationärer Formträger und ein beweglicher Formträger über Holme miteinander verbunden sind. Die Formträger spannen zwischen sich einen Formspannraum zur Aufnahme von Spritzgießformen auf. Auf der Seite des beweglichen Formträgers sind Kolben von Schließzylindern vorgesehen, die mit Betätigungsabschnitten der Holme bedarfsweise in Eingriff stehen. Zur Verriegelung von Holm und beweglichem Formträger werden dazu Halbmuttern in Wirkeingriff mit dem betätigbaren Abschnitt gesteuert, so dass anschließend durch eine andere Einheit die Schließkraft aufgebracht werden kann. (vgl. auch DE 10 2016 006 956 A1)

Von der Firma Husky Injection Moulding System ist eine derartige Verriegelung mit einem Bajonettverschluss bekannt. Der Holm besitzt hierzu Bereiche, in die ein Schließkolben eingreifen kann, sowie Bereiche, entlang derer der radial auf dem Führungsholm bewegliche Schließkolben gleiten kann. Durch eine Drehung des Schließkolbens wird ein formschlüssiger Eingriff bewirkt, so dass an diesem Kolben zugleich zumindest ein Teil der Schließkraft ebenfalls aufgebracht werden kann.

Aus der DE 10 2014 012 096 A1 ist ein Verfahren zum Betrieb einer Schließeinheit einer Formgebungsmaschine mit einem Druckmechanismus bekannt, welcher über Holme eine Beaufschlagung der beweglichen Formaufspannplatte mit einer Schließkraft bewirken kann. Für die Verriegelung der beweglichen Formaufspannplatte mit den Holmen ist ein Verriegelungsmechanismus vorgesehen. Damit ist zwar die Formaufspannplatte beweglich gelagert, jedoch nicht der Verriegelungsmechanismus, der nicht mit der Formaufspannplatte verbunden ist. Der Verriegelungsmechanismus 13 wird mittels einer Kolben-ähnlichen Vorrichtung geöffnet und geschlossen, ist jedoch nicht schwimmend gelagert.

Aus der EP 1 068 060 B1 ist eine Formschließeinheit bekannt, bei der im Bewegungsbereich der Formschließeinheit ein Abschnitt vorgesehen ist, in dem bei Überführung des Formträgers in diesen Bereich eine Entkopplung der Abstützplatte erfolgt, so dass die Abstützplatte selbst durch den Antrieb verstellt werden kann, um eine Formhöhenverstellung zu bewirken. Voraussetzung für eine derartige Lösung ist allerdings die Verwendung bzw. der Aufbau einer Drei-Platten-Maschine. Mit Abstützelement, beweglichem Formträgen und stationärem Formträger.

Aus der DE 40 32 106 A1 ist an einer hydraulischen Presse ein an einem Schließhubantrieb angeschlossener Pressenstößel in Schließlage der Presswerkzeuge mit einem hydraulischen Presshubantrieb über wenigstens eine Kupplung verbunden. Die Kupplung besteht aus einer Kupplungsstange und einem die Kupplungsstange aufnehmenden Schließkopf, der mit der Kupplungsstange formschlüssig verriegelbar ist. Um eine stufenlose Angleichung des Presshubes an die jeweilige Schließlage der Presswerkzeuge sicherzustellen, ohne auf eine formschlüssige Kupplung zu verzichten, wird der Schließkopf in Richtung der Kupplungsstange schraubverstellbar abgestützt.

Die DE 44 03 079 C1 zeigt an einer Formschließeinheit einer Spritzgießmaschine eine Kraftübertragungselement, das durch mehrere gemeinsam mit dem beweglichen Formträger bewegliche Holme gebildet ist, die bei geöffneter Spritzgießform den Formspannraum freigeben.

Dem genannten Stand der Technik ist gemeinsam, dass regelmäßig gesonderte Einheiten einerseits zur Verriegelung der Holme mit einem der Formträger sowie zum Aufbringen der Schließkraft erforderlich sind.

Ausgehend von diesem Stand der Technik liegt der vorliegenden Erfindung die Aufgabe zugrunde, eine Formschließeinheit und ein Verfahren zur Verriegelung von Kraftübertragungselementen an einer Spritzgießmaschine zu schaffen, bei der der Verriegelungsmechanismus zum Verriegeln der Holme mit dem Formträger mit der Einheit zum Aufbringen der Schließkraft in eine gemeinsame Einheit kompakt integriert ist und mehrere Funktionen erfüllt.

Diese Aufgabe wird durch eine Formschließeinheit mit den Merkmalen des Anspruches 1 sowie durch ein Verfahren zum Verriegeln eines Kraftübertragungselements mit den Merkmalen des Anspruches 13 gelöst. Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Die Formschließeinheit weist einen stationären Formträger und einen relativ dazu beweglichen Formträger auf, die zwischen sich einen Formspannraum zur Aufnahme von Spritzgießformen bilden. Der bewegliche Formträger ist entlang einer Schließrichtung zum Schließen und Öffnen der Spritzgießform beweglich. Mittels einer Formfahreinrichtung kann der bewegliche Formträger in und außer Formschluss der Spritzgießform überführt werden. Über wenigstens ein Kraftübertragungselement sind die Formträger miteinander verbunden, wobei das Kraftübertragungselement mit einem der Formträger verbunden ist. Das Kraftübertragungselement weist an seinem dem anderen Formträger zugeordneten Bereich einen für einen Wirkeingriff betätigbaren Abschnitt auf. An diesem anderen Formträger ist eine Verriegelungseinrichtung vorgesehen, die zum Aufbringen der Schließkraft mit dem betätigbaren Abschnitt des Kraftübertragungselements in formschlüssige Wirkverbindung überführbar ist. Die Verriegelungseinrichtung weist eine schwimmende Spannzange auf, die zur Verriegelung von Kraftübertragungselement und Formträger beim Formschluss mit dem betätigbaren Abschnitt in formschlüssige Wirkverbindung überführbar ist. Gleichzeitig ist die Spannzange mit dem Kolben einer Kolben-Zylinder-Einheit zum Aufbringen der Schließkraft verbunden. In der Spannzange ist ein Entriegelungselement angeordnet, das als Entriegelungsstange ausgebildet ist. Das Entriegelungselement ist zum Öffnen der Spannzange so angeordnet, dass es nicht nur aus einem Zylinderraum heraus die Öffnung bewirken kann. Es ist gleichzeitig so angeordnet, dass es beim Öffnen der Spannzange stirnseitig am Kraftübertragungselement bzw. Holm anliegt, und kann damit aus demselben Zylinderraum heraus, aus dem das Öffnen der Spannzange erfolgt, insbesondere bei einem Verkleben der Spritzgießform ein Öffnen mit hoher Kraft, also ein Hochdrucköffnen der Spritzgießform bewirken. Dadurch, dass damit das Entriegelungselement mehrere Funktionen erfüllt, ist ein kompakter Aufbau der gesamten Verriegelungseinrichtung zu erreichen. Dadurch kann eine kompakte Baueinheit gebildet werden, die platzsparend an einem der Formträger angebracht werden kann.

Durch eine vollständige Lösbarkeit der vorzugsweise als Holme ausgebildeten Kraftübertragungselemente werden zudem die baulichen Voraussetzungen dafür geschaffen, den Formspannraum, in dem die Spritzgießformen beim Spritzgießen von Spritzlingen aufgenommen werden, vollständig von den Holmen frei zu fahren, was eine bessere Zugänglichkeit der Spritzgießform gestattet. Dennoch kann auf diese Weise eine gleichbleibende Kraftaufbringung und damit auch eine gleichbleibend gute Qualität der Spritzteile sichergestellt werden.

Dabei ist eine Verwendung einer derartigen Lösung sowohl an einer Drei-Platten-Maschine als auch an einer Zwei-Platten-Maschine möglich, bei der die Einheit zur Aufbringung der Schließkraft unmittelbar an einem der Formträger angreift, so dass auf ein Abstützelement verzichtet werden kann.

Vorzugsweise sind Spannzange und Kolben Teile einer in sich geschlossenen Baugruppe, die insofern auch als Baugruppe der Maschine zugeführt werden kann. Dies hat Vorteile nicht nur bei der Herstellung der Spritzgießmaschine im Werk des Spritzgießmaschinenherstellers, sondern auch dann, wenn Spritzgießmaschinen auch an entfernten Plätzen dieser Erde schnell und zuverlässig gewartet werden müssen, da derartige Baugruppen dann entweder vor Ort gut vorgehalten oder schnell dorthin geliefert werden können. Am Einsatzort ist dann lediglich noch ein Austausch der Baugruppe gegen die bisherige Baugruppe vorzunehmen.

Bei einer vorteilhaften Ausgestaltung ist die Spannzange zwangsgeführt mit dem Kraftübertragungselement verriegelbar, wobei dann im verriegelten Zustand mittels eines Kolbens einer Kolbenzylindereinheit ein Hochdruck zur Erzeugung der Schließkraft erzeugbar ist. Damit erfolgt das Verriegeln zwischen Formträger und Kraftübertragungselement mittels der Spannzange als auch die Schließkraftaufbringung in ein und derselben Baugruppe.

Es ist von Vorteil, wenn der Kolben zum Aufbringen der Schließkraft gegen die Kraft elastischer Elemente betätigbar ist, da in diesem Fall zum einen eine Dämpfung der Schließkraft möglich ist. So wird eine Überlastsicherung beim Einfahren des Holms in die Spannzange erreicht, was zum Beispiel in Folge von unsachgemäß eingestellter Formhöhe der Fall sein kann. Damit wird gleichzeitig die gesamte Spritzgießmaschine entlastet. Andererseits kann durch den einseitig beaufschlagbaren Kolben sichergestellt werden, dass eine zuverlässig gleichbleibende Kraft aufgebracht wird. Diese Ausführungsform schließt jedoch nicht aus, dass auch ein beidseitig beaufschlagbarer Kolben grundsätzlich einsetzbar ist.

In einem Ausführungsbeispiel weist die Entriegelungselement weist, das heißt an ihrem der formschlüssigen Wirkverbindung zwischen Kraftübertragungselement und Spannzange benachbarten Ende ein Druckstück auf, das bei Anlage an der Spannzange eine radiale elastische Verformung der Spannzange bewirkt. Dadurch kann auf einfache Weise die Spannzange betätigt und damit in und außer Wirkeingriff mit dem Kraftübertragungselement gebracht werden.

Günstigerweise ist der Kolben zum Aufbringen der Schließkraft über die Spannzange mit einer zugehörigen Lagerung an wenigstens einem zentrisch in der Spannzange angeordneten Entriegelungselement gelagert. Dadurch ist die Verbindung zwischen Spannzange und Kolben als schwimmende Lagerung auf einfache Weise in axialer Richtung, das heißt in Schließrichtung der Spritzgießmaschine, mit einfachen Mitteln sichergestellt. In einer besonders bevorzugten Ausführungsform ist das ebenfalls axial bewegliche Entriegelungselement dann seinerseits innerhalb einer Gleithülse oder innerhalb einer Anformung des Zylinderdeckels relativ zum Zylinderdeckel beweglich geführt. Dadurch wird eine axiale Führung des Entriegelungselements und damit der gesamten in der Verriegelungseinrichtung aufgenommenen Einheit aus Spannzange und Kolben sichergestellt.

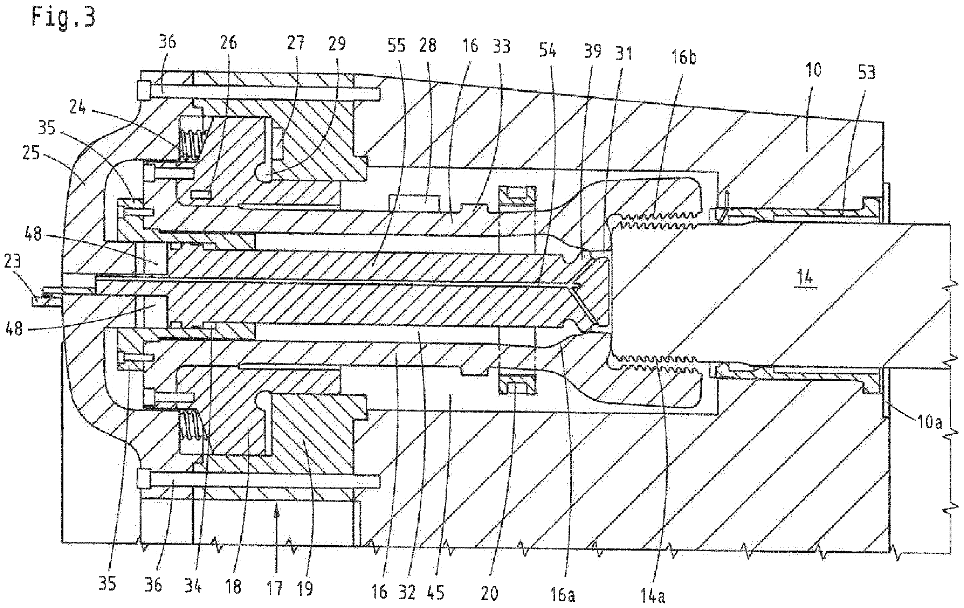

Im Ausführungsbeispiel der Figuren 3 bis 5b wird als vorteilhafte Ausgestaltung eine aktiv schließende Spannzange dargestellt, das heißt die Spannzange ist so ausgestaltet, dass sie grundsätzlich im unverformten Zustand den Wirkeingriff zwischen Kraftübertragungselement und Spannzange sicherstellen will. Dabei bildet die über einen Zylinder für den Kolben am Formträger axial beweglich gelagerte Spannzange im radial elastisch verformten geöffneten Zustand eine Aufnahmeöffnung zum Einführen des von der Spannzange betätigbaren Abschnitts des Kraftübertragungselements. Durch eine derartige Lösung ist sichergestellt, dass grundsätzlich der Wirkeingriff zwischen Kraftübertragungselement und Spannzange sich von alleine einstellt, sofern die miteinander in Wirkeingriff stehende Elemente sich an der entsprechenden Position befinden. Dadurch ergibt sich vorzugsweise, dass die Spannzange aktiv schließend in einem radial unverformten Zustand mit einer Verzahnung in eine Verzahnung des betätigbaren Abschnitts eingreift und durch entsprechenden Kraftaufwand, das heißt Verformung der Spannzange, dieser Zustand wieder geöffnet werden kann.

Vorzugsweise wird als zusätzliches Sicherungselement eine an der als Entriegelungselement ausgebildeten Entriegelungsstange radial befestigte Schiebehülse vorgesehen, die im radial unverformten Zustand an der Spannzange mit einem Anlagebereich der Spannzange zur Sicherung der Spannzange gegen ein radiales Öffnen zur Anlage kommt. Damit ist nicht nur sichergestellt, dass die Spannzange von alleine aktiv schließend in den Wirkeingriff gelangt, sondern dass sie dort auch gegen ein unbeabsichtigtes Öffnen gesichert ist. Dies ist angesichts der hohen zu übertragenden Kräfte ein zusätzliches Sicherheitsmerkmal.

In einer alternativen Ausführungsform kann die Formschließeinheit vorzugsweise auch so ausgestaltet werden, dass der geöffnete Zustand der Spannzange der unverformte ist. Die Spannzange kann dann ebenso wie in der "aktiv schließenden" Alternative über einen Zylinder für den Kolben am Formträger axial gelagert werden, allerdings weist sie in diesem Fall die Aufnahmeöffnung zum Einführen des betätigbaren Abschnitts des Kraftübertragungselement im unverformten Zustand auf. Vorzugsweise wird dann die Spannzange radial elastisch verformt, um die Wirkverbindung zwischen Kraftübertragungselement und Spannzange herzustellen, sodass es sich in diesem Fall um eine "passiv schießende" Ausführungsform handelt.

Vorzugsweise wird bei einer derartig "passiv schließenden" Ausgestaltung ein stirnseitig an der Spannzange angreifender weiterer Kolben vorgesehen, um die Spannzange in ihrer geschlossenen Position zu fixieren.

Um eine platzsparende und dennoch zuverlässig arbeitende Schmierstoffversorgung zu erreichen, wird vorzugsweise an der Entriegelungsstange und/oder in einer Bohrung des Formträgers, in der das Kraftübertragungselement aufnehmbar ist, eine Schmierstoffversorgung vorgesehen, die die entsprechenden Elemente aufweist, die für eine derartige Versorgung erforderlich sind. Dabei werden ohnehin vorhandene Freiräume zur Zuführung der Schmiermittel genutzt und die Schmierstoffzufuhr erfolgt genau an dem Ort, an dem die Schmiermittel benötigt werden, das heißt im Bereich der Einführung des Kraftübertragungselements in den Formträger sowie in dem Bereich des Anliegens und der Relativbewegung zwischen Entriegelungselement und Spannzange.

Vorzugsweise kann nach einer weiteren Ausgestaltung die Spannzange auch mehrteilig ausgebildet sein und quer zur Schließrichtung drehbeweglich gelagerte Spannelemente aufweisen. Die Spannelemente sind an einem Lagerelement gelagert und entweder mittels mit einem Entriegelungselement verbundenen Betätigungselement oder mittels einer Schiebehülse in und außer Wirkeingriff mit dem Kraftübertragungselement überführbar. Auch hier erfolgt vorzugsweise eine zwangsgeführte Bewegung der Spannelemente. Der Vorteil bei dieser Ausgestaltung beruht darin, dass eine elastische Verformung der Spannzange nicht erforderlich ist, dafür muss im Gegenzug eine entsprechende Führung und Lagerung der Spannelemente gewährleistet werden.

Das Kraftübertragungselement ist vorzugsweise durch mehrere gemeinsam mit dem beweglichen Formträger verbundene Holme gebildet, so dass eine zentrische Krafteinleitung möglich ist. Zudem ist dadurch ein freier Zugang zum Formspannraum gewährleistet, da nach Entriegelung der Spannzange die Holme gemeinsam mit den beweglichen Formträgern bewegbar sind. Alternativ kann mit Kraftübertragungselementen gearbeitet werden, die um den Formspannraum herum geführt sind.

Die erfindungsgemäß gestellte Aufgabe wird auch durch ein Verfahren zum Verriegeln eines Kraftübertragungselements an einem Formträger einer Spritzgießmaschine gelöst. Für dieses Verfahren weist die Spritzgießmaschine die baulichen Elemente umfassend einen stationären Formträger, einen beweglichen Formträger, eine Formfahreinrichtung sowie wenigstens ein Kraftübertragungselement auf, wobei ein betätigbarer Abschnitt eines Kraftübertragungselements beim Formschluss der Teile der Spritzgießform an dem anderen Formträger formschlüssig mittels wenigstens einer Verriegelungseinrichtung verriegelt wird und im so verriegelten Zustand eine über das Kraftübertragungselement wirkende Schließkraft aufgebracht wird. Dadurch, dass das Kraftübertragungselement an dem anderen der Formträger mittels wenigstens eine Spannzange schwimmend gelagert wird, die innerhalb der Verriegelungseinheit zugleich mit einem Kolben zur Aufbringung der Schließkraft verbunden ist, wird nicht nur eine kompakte bauliche Lösung geschaffen. Zugleich wird eine zuverlässige Lösung zur Aufbringung der vor allem im verriegelten Zustand erforderlichen Schließkräfte sichergestellt. Die schwimmende Lagerung trägt dazu bei, dass die Bauteile nicht über Gebühr beansprucht werden, da in beiden Richtungen der Schließrichtung stets ein entsprechender Raum vorgesehen ist, über den Kräfte und Trägheitsmomente abgefangen werden können. Dadurch wird erreicht, dass beim Einfahren der Holme eine unsanfte Kontaktanlage zwischen Holm und Spannzange, z.B. bedingt durch Positionierungsfehler minimiert wird und dadurch die Bauteile vor Verschleiß und Versagen geschützt werden. Zudem wird das Entriegelungselement nicht nur zum Öffnen der Spannzange beaufschlagt, sondern ist so angeordnet, dass durch weitere Kraftaufbringung aus dem die Öffnung bewirkenden Zylinderraum auch Druck auf das Kraftübertragungselement aufgebracht werden kann, so dass mit ein und demselben Element ergänzend ein Hochdrücköffnen der Spritzgießform bewerkstelligt werden kann.

Vorzugsweise wird die Spannzange nicht nur zwangsgeführt mit dem Kraftübertragungselement verriegelt, sondern es wird gleichzeitig mittels des Kolbens ein Hochdruck zur Erzeugung der Schließkraft im verriegelten Zustand erzeugt. Damit kann in ein und derselben baulichen Einheit die Verriegelung als auch die Krafterzeugung erfolgen, was zu einem fließenden Übergang zwischen Verriegelung und Druckerzeugung und damit auch zur Verringerung der Zykluszeiten beitragen kann.

In einem bevorzugten Ausführungsbeispiel erfolgt die elastische Verformung der Spannzange mittels eines Druckstücks, das vorzugsweise stirnseitig an einem zentrisch zur Spannzange angeordneten Entriegelungselement angeordnet ist. Durch die zentrische Anordnung des Druckstücks in einem aufgrund des Aufbaus einerseits vorgesehen Freiraums, andererseits für die Entriegelung erforderlichen Raum des Entriegelungselements kann zuverlässig mit ein und demselben Element eine Entriegelung als auch elastische Verformung erfolgen.

Werden die Bauteile der Verriegelungseinrichtung vorzugsweise so betrieben, dass der Kolben über die Spannzange mit wenigstens einer Lagerung in einer zentrisch in der Spannzange angeordneten Entriegelungsstange bewegt wird, ergibt sich eine kompakte Einheit, die gleichzeitig mehrere Aufgaben erfüllen kann, nämlich Lagerung des Kolbens zur Druckaufbringung sowie Ver- und Entriegelung der Verriegelungseinrichtung.

Um eine zuverlässige Führung und damit auch Genauigkeit beim Aufbringen der Schließkraft als auch bei Bewegung der hierfür erforderlichen Bauteile zu erreichen, kann das Entriegelungselement innerhalb einer als Lagerung ausgebildeten Gleithülse oder innerhalb einer als Lagerung ausgebildeten Anformung relativ zu einem Zylinderdeckel eines Zylinders für den Kolben bewegt werden. Es ergibt sich ein Zusammenwirken von miteinander in einer Einheit aufgebauten Elementen zur Umsetzung der verschiedenen im Rahmen des Spritzgießvorgangs vor allem beim Schließen der Spritzgießform erforderlichen Schritte. Dies kann auf einfache und günstige Weise sichergestellt werden und trägt gleichzeitig zur gewünschten hohen Qualität der herzustellenden Spritzgießteile bei.

Nach einem bevorzugten Ausführungsbeispiel einer aktiv schließenden Spannzange weist die Spannzange im radial elastisch verformten, geöffneten Zustand eine Aufnahmeöffnung für den betätigbaren Abschnitt des Kraftübertragungselements auf, der dort eingeführt wird. Wird anschließend die radiale Verformung aufgehoben, stellt sich die gewünschte formschlüssige Verriegelung zwischen Spannzange und Übertragungselement ein. Dadurch kann durch wenige Verfahrensschritte die Verriegelung erreicht werden, bevor die Schließkraft aufgebracht wird.

In einer alternativ bevorzugten passiv schließenden Ausführungsform der Spannzange wird die Aufnahmeöffnung in der Spannzange im radial unverformten geöffneten Zustand vorgesehen, sodass in diesem Zustand der Holm in die Aufnahmeöffnung eingeführt werden kann. Anschließend wird die Spannzange nach innen radial elastisch verformt und dadurch die Wirkverbindung mit dem Kraftübertragungselement sichergestellt. Dadurch kann auf alternative Weise ebenfalls ein schnelles und effektives Verriegeln zwischen Kraftübertragungselement und Spannzange erreicht werden.

Nach einer weiteren Ausführungsform kann alternativ vorzugsweise die Spannzange auch mehrteilig mit quer zu Schließrichtung drehbeweglich gelagerten Spannelementen ausgebildet sein. Die Spannelemente werden an einem Lagerelement gelagert und können durch eine Relativbewegung des Entriegelungselement gegenüber den Spannelementen entweder durch ein damit verbundenes Entriegelungselement oder durch eine gegebenenfalls auch unabhängig bewegbare Schiebehülse in und außer Wirkeingriff mit dem Kraftübertragungselement überführt werden. Die Spannelemente sind vorzugsweise zwangsgeführt, um einen zuverlässigen Kraftfluss und eine zuverlässige Verbindung zwischen Kraftübertragungselement und Spannelement sicherzustellen.

Im Folgenden wird die Erfindung an mehreren in den beigefügten Figuren dargestellten Ausführungsbeispielen näher erläutert. Es zeigen:
- Fig. 1: eine dreidimensionale Darstellung einer Formschließeinheit einer Zwei-Platten-Maschine in einem ersten Ausführungsbeispiel,
- Fig. 2: eine dreidimensionale Darstellung der Formschließeinheit von Fig. 1 mit Blick auf die Formhöhenverstellung am beweglichen Formträger,
- Fig. 3, 4: einen Schnitt nach Linie III-III bzw. IV-IV von Fig. 8 durch eine Verriegelungseinrichtung im geöffneten bzw. geschlossenen Zustand,
- Fig. 5a: einen Schnitt nach Linie Va-Va von Fig. 8 durch eine Verriegelungseinrichtung gemäß Fig. 4,
- Fig. 5b: einen vergrößerten Ausschnitt im Bereich Z von Fig. 5a,
- Fig. 6a, 6b: einen Schnitt durch eine Verriegelungseinrichtung in einem alternativen zweiten Ausführungsbeispiel im geöffneten und im geschlossenen Zustand,
- Fig. 7: einen Schnitt durch eine Verriegelungseinrichtung in einem dritten Ausführungsbeispiel mit einer alternativen Aufbringung der Schließkraft,
- Fig. 8: einen vergrößerten Ausschnitt auf eine Verriegelungseinrichtung in Seitenansicht und mit Blick auf den stationären Formträger aus Richtung der Aufspannplatte,
- Fig. 9a, 9b: alternative Ausführungsformen der Formschließeinheit an einer Drei-Platten-Maschine in einer dreidimensionalen Darstellung.
- Fig. 10: einen Schnitt durch eine Verriegelungseinrichtung in einem vierten Ausführungsbeispiel mit einer gelenkigen Lagerung von Spannelementen,
- Fig. 11: einen Schnitt nach Linie XI-XI von Fig. 10 durch die Verriegelungseinrichtung mit geöffneten Spannelementen,
- Fig. 12: eine Ansicht gemäß Fig. 10 durch die Verriegelungseinrichtung mit geöffneten Spannelementen,
- Fig. 13, 14: einen Schnitt nach Linie XIII-XIII von Fig. 11 durch die Verriegelungseinrichtung mit geschlossenen bzw. geöffneten Spannelementen,
- Fig. 15: einen Schnitt durch eine Verriegelungseinrichtung in einem fünften Ausführungsbeispiel mit geschlossenen, drehbeweglichen Spannelementen und einer zylinderbetätigten Schiebehülse,
- Fig. 16: einen Schnitt nach Linie XVI-XVI von Fig. 15 durch die Verriegelungseinrichtung,
- Fig. 17: einen Schnitt durch die Verriegelungseinrichtung gemäß Fig. 15 bei geöffneten Spannelementen,
- Fig. 18: einen Schnitt nach Linie XVIII-XVIII von Fig. 17 durch die Verriegelungseinrichtung.

Die Formschließeinheit stellt nur einen Teil der Spritzgießmaschine dar, denn üblicherweise ist zusätzlich eine zeichnerisch nicht dargestellte Spritzgießeinheit vorgesehen, über die das zu plastifizierende Material plastifiziert und in einen Formhohlraum der Spritzgießform eingespritzt wird. Der entsprechende Aufbau einer Spritzgießmaschine bestehend aus den Teilen Formschließeinheit und Spritzgießeinheit ist dem Fachmann jedoch bekannt, so dass hierauf in dieser Anmeldung nicht näher eingegangen wird.

Gemäß Fig. 3 weist die Verriegelungseinrichtung 15 eine schwimmende Spannzange 16 auf, die zur Verriegelung von Kraftübertragungselement (Holm 14) und dem anderen der Formträger (stationärer Formträger 10) beim Formschluss mit dem betätigbaren Abschnitt 14a in formschlüssige Wirkverbindung überführbar ist. Dabei ist die Spannzange 16 mit dem Kolben 18 einer Kolben-Zylinder-Einheit 17 verbunden oder bildet zugleich einen Teil des Kolbens der Kolben-Zylinder-Einheit 17 zum Aufbringen der Schließkraft. Auf den zugehörigen Aufbau wird weiter unten noch näher eingegangen.

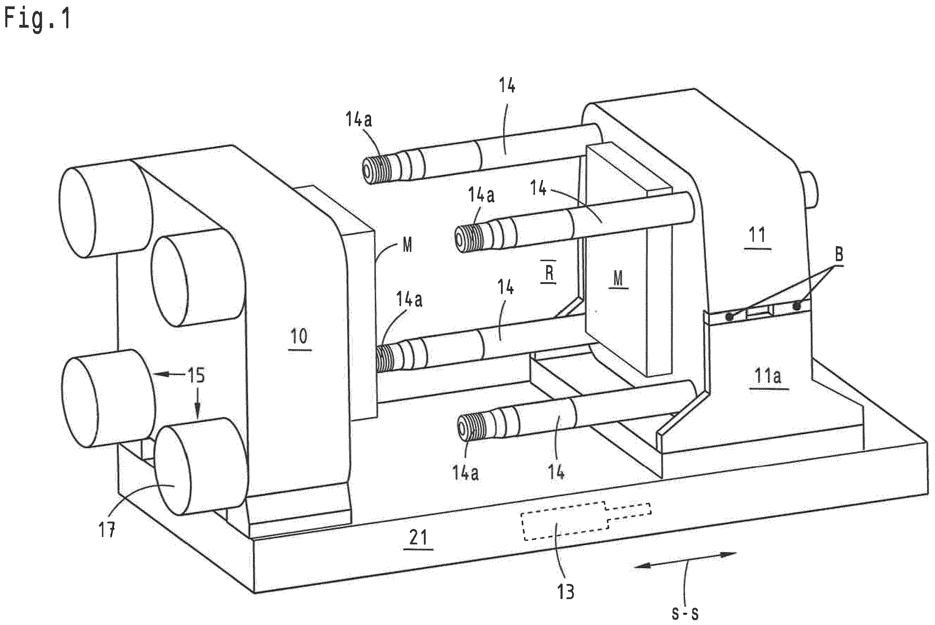

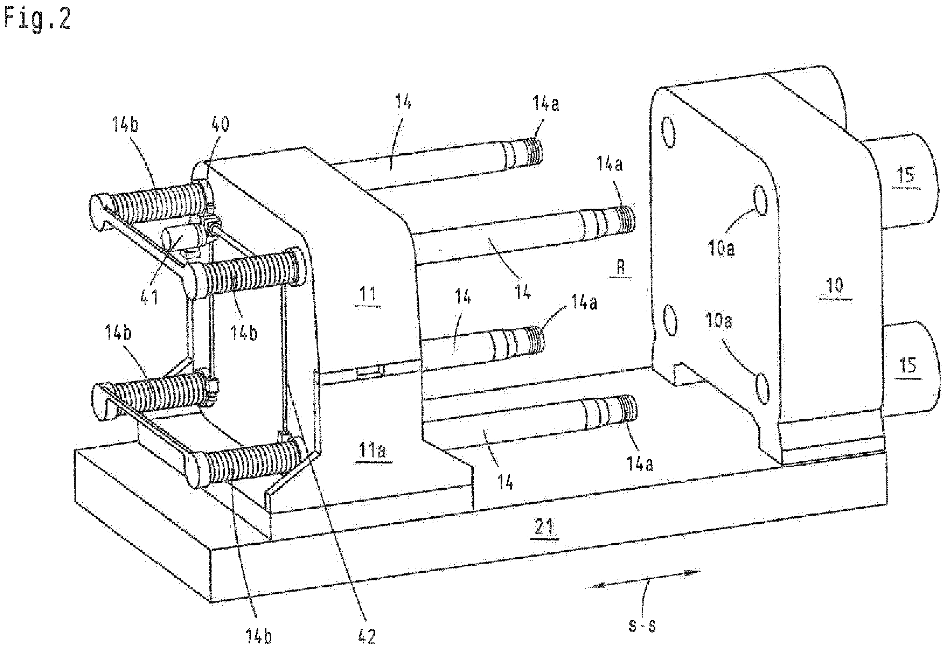

Gemäß Fig. 1 und 2 wird das wenigstens eine Kraftübertragungselement durch mehrere gemeinsam mit dem beweglichen Formträger 11 bewegliche Holme 14 gebildet, die bei geöffneter Spritzgießform M den Formspannraum R freigeben. Um den Formschluss zu bewerkstelligen, tauchen die Holme 14 mit ihrem betätigbaren Abschnitt 14a in Aufnahmebohrungen 10a des stationären Formträgers 10 ein, damit dann dort in noch zu beschreibender Weise die formschlüssige Verbindung zwischen Formträger und Kraftübertragungselement hergestellt werden kann. Dabei werden die Holme 14 in den Aufnahmebohrungen 10a in Lagerhülsen 53 vorzentriert, die dazu mit einer harmonischen Einführfase versehen sind.

Fig. 2 zeigt zudem auf der vom Formspannraum R abgewandten Seite des beweglichen Formträger 11 die Formhöhenverstelleinrichtung 42, die erforderlich ist, um die Schließwege zu optimieren und/oder eine optimale Stellung der Formträger beim Formschluss zu gewährleisten. Erkennbar ist, dass die Holme 14 in diesem Bereich einen Gewindeabschnitt 14b aufweisen, der mit Muttern 40 in Wirkverbindung steht. Die Muttern werden über einen Motor 41 und entsprechende Getriebeeinheiten gestellt, wobei sich dabei eine Relativbewegung zwischen den Kraftübertragungselementen und dem beweglichen Formträger 11 in Schließrichtung s-s ergibt.

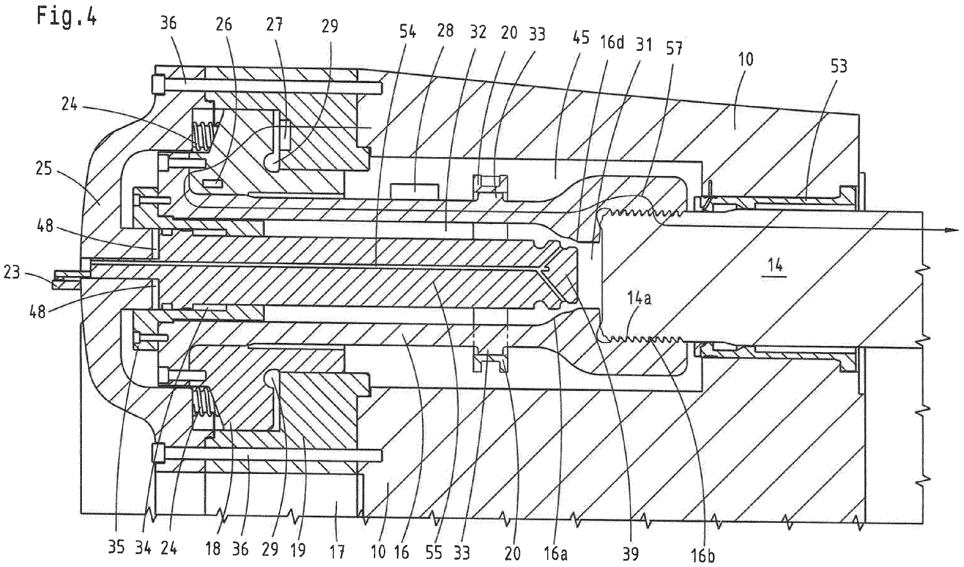

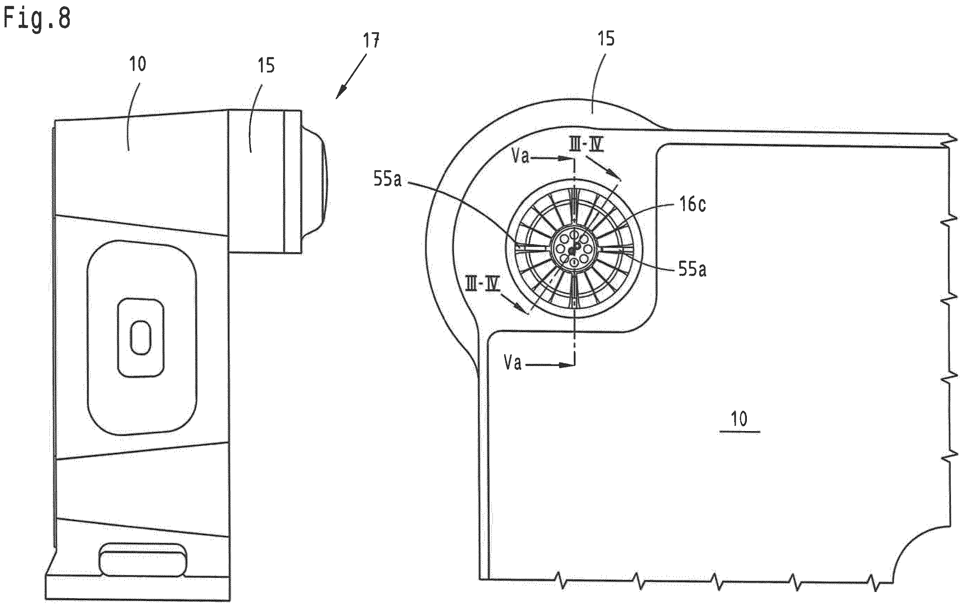

Im Folgenden wird der Aufbau der Verriegelungseinrichtung anhand der Figuren 3 und 4 näher erläutert. Fig. 3 zeigt einen Schnitt nach Linie III-III von Fig. 8 durch eine Verriegelungseinrichtung 15, wobei in den Figuren 3, 4 auch die Spannzange 16 auf ihrer vollen Länge geschnitten ist. Die Lagerung der Bauteile erfolgt von außen nach innen, d.h. der Kolben 18 stützt sich am Zylinder 19 ab. Die Spannzange 16 ist mit dem Kolben 18 verbunden z.B. verschraubt und eine Gleithülse 35 ist mit der Spannzange 16 in den Figuren an ihrem linken Ende gekoppelt. Das als Entriegelungsstange 55 ausgebildete Entriegelungselement wird im hinteren Bereich in den Figuren links mittig in der Gleithülse 35 geführt und vorne in den Figuren rechts erfolgt eine Zentrierung der Entlastungsstange 55 über die Anlage des am vorderen Ende der Entriegelungsstange angeordneten Druckstück 39 am Konus 16a der Spannzange 16.. (In den Ausführungsbeispielen der Fig. 1 bis 6b wird das Entriegelungselement als Entriegelungsstange 55 und die Lagerung als Gleithülse 35 bezeichnet.) Die Spannzange 16 steht aber auch mit dem Kolben 18 der Kolben-Zylinder-Einheit 17 in Verbindung, der dazu bestimmt ist, die Schließkraft aufzubringen. Der Kolben 18 ist im Zylinder 19 gelagert, das als Hochdruckzylinderrohr ausgebildet ist. Der Zylinder 19 ist durch den Zylinderdeckel 25 in Fig. 3 links verschlossen. Der Kolben 18 kann in der Kolben-Zylinder-Einheit 17 durch Aufbringen von Fluid im Zylinderraum 29 in Fig. 3 gegen die Kraft elastischer Mittel wie der Federn 24 nach links bewegt werden. Bei dieser Bewegung werden auch die Spannzange 16 und die Gleithülse 35 auf der Entriegelungsstange 55 nach links bewegt. Die Spannzange 16 stützt sich damit über die Gleithülse 35 als Führungselementen am Kolben 18 und damit am Zylinder 19 ab. Die Entriegelungsstange 55 wird somit in der Gleithülse 35 geführt und lässt sich in horizontaler Richtung verschieben. Dadurch kann sich die Entriegelungsstange 55 selbst in der Spannzange 16 ausrichten, ohne dass die Spannzange 16 dadurch gelagert wird.

In der Stellung gemäß Fig. 3 befindet sich die Verriegelungseinrichtung 15 in einer verformten Stellung, d.h. sie ist durch das Druckstück 39 passiv geöffnet. Ausgehend von der Stellung in Fig. 3, in der das Druckstück 39 die Spannzange 16 geöffnet hält, wird Druck im Zylinderraum 34 durch Zufuhr eines Fluids aufgebracht, wobei sich die Entriegelungsstange 55 zusammen mit dem Druckstück 39 ausgehend von Fig. 3 in eine Position gemäß Fig. 4 nach links bewegt, d.h. sich in Richtung Zylinderdeckel 25 bewegt und ggf. bis zur Anlage am Zylinderdeckel 25 kommt. Dadurch gelangt das Druckstück 39 entlang des Kantenzugs 16d aus dem Bereich des Konus 16a, so dass sich der Freiraum 31 ergibt. Die Entriegelungsstange 55 mit dem Druckstück 39 bewegt sich dabei im Ringraum 32. Diese Bewegung führt dazu, dass sich die Spannzange 16 elastisch rückverformt, d.h. in eine aktiv schließende Stellung gelangt, wobei die Verzahnung 16b der Spannzange 16 radial nach innen und damit in Eingriff mit der Verzahnung des betätigbaren Abschnitts 14a des Kraftübertragungselements bzw. der Holme 14 gelangt. Beim Entlasten der Spannzange bedingt durch das Zurückschieben des Druckstückes 39 bewegt sich die Spannzange damit in die geschlossene Ausgangsstellung zurück. Dadurch wird eine Verriegelung zwischen der am stationären Formträger befestigten Verriegelungseinrichtung 15 und dem Holm 14 erreicht. Über eine optimierte Bearbeitung der Verzahnungsgeometrie lässt sich die in Ausgangslage einstellende Vorspannkraft der im Eingriff befindlichen Elemente (Holm, Spannzange) beeinflussen. Mit Druck beaufschlagt handelt es sich damit um eine aktiv geschlossene bzw. verriegelnde Stellung der Verriegelungseinrichtung 15, weil ohne Einwirken von äußeren Kräften die Spannzange 16 in Wirkverbindung mit den Kraftübertragungselementen ist.

Fig. 3, 4 zeigen damit eine Einheit, in der die Elemente der Spannzangen16 als Biegebalken so ausgelegt sind, dass die Verzahnung immer selbsttätig schließen möchte (Prinzip aktiv schließend, passiv öffnend). Hierbei wird das Druckstück 39 zum Aktivieren der Öffnungsbewegung benötigt.

Um nun die Schließkraft aufzubringen, wird Druckmedium dem Zylinderraum 29 zugeführt, wobei der Kolben 18 sich gegen die Kraft der Feder 24 in Fig. 4 nach links bewegt und dadurch an den Holmen zieht und so die Schließkraft ggf. unter Hochdruck aufbringt. Grundsätzlich könnte der Kolben 18 in einer zeichnerisch nicht dargestellten Ausführungsform auch beidseitig mit Fluid beaufschlagbar ausgebildet sein. In diesem Fall könnten die Federn 24 entfallen.

Die Befestigung der Verriegelungseinrichtung 15 am stationären Formträger 10 erfolgt über die Befestigungsmittel 36, wobei über die Befestigungsmittel 36 der Zylinderdeckel 25 auf den Zylinder 19 gepresst und beide zusammen mit dem stationären Formträger verbunden werden. Die bei der Betätigung der Verriegelungseinheit auftretenden Bewegungen und Kräfte werden über Wegsensor 23, Schließkraftsensor 26, einen Drucksensor 27 für das Fluid sowie einen Dehnungsmesstreifen 28 erfasst.

Aufgrund der Lagerung gegen die Federn 24 und über den Zylinderraum 29 ist der Kolben 18 und damit auch die an ihm befestigte Spannzange 16 schwimmend in der Verriegelungseinrichtung 15 gelagert.

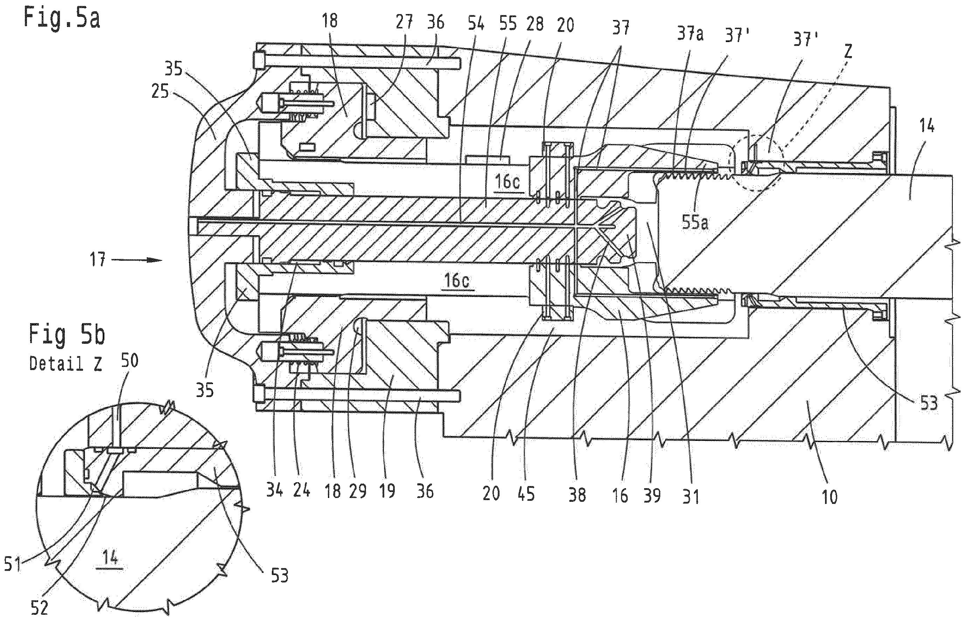

Fig. 3 und 4 zeigen, dass an der Verriegelungseinrichtung 15 eine Schiebehülse 20 gelagert ist, wobei im Ausführungsbeispiel die Schiebehülse 20 mittels Befestigungsmittel gemäß Fig. 5a an der Entriegelungsstange 55 befestigt ist. Diese Schiebehülse befindet sich in der Position gemäß Fig. 3, also bei geöffneter Spannzange 16, in einem Bereich, der eine radiale elastische Verformung der Spannzange zulässt. Wird die Entriegelungsstange 55 jedoch ausgehend von Fig. 3 nach links bewegt in eine Position gemäß Fig. 4 und damit relativ dazu die Spannzange 16 nach rechts, gelangt ein Anlagebereich 33 der Spannzange 16 gemäß Fig. 4 unter die Schiebehülse 20, so dass die Schiebehülse 20 die Spannzange 16 an einer unbeabsichtigten radialen Bewegung und damit einem unbeabsichtigten Öffnen der Verriegelung zwischen stationärem Formträger 10 und Kraftübertragungselement hindert, also gegen ein derartiges Öffnen sichert.

In diesem verriegelten Zustand der Verriegelungseinrichtung 15 erfolgt der Kraftfluss ausgehend vom Zylinderraum 29, der zwischen dem am stationären Formträger 10 befestigten Zylinder 19 und dem Kolben 18 angeordnet ist, über den Kolben 18 auf die am Zylinderdeckel 25 über die Gleithülse 35 geführte Spannzange 16 über die ineinander greifenden Verzahnungen auf den Holm 14, der seinerseits in der Lagerhülse 53 im stationären Formträger 10 axial beweglich gelagert ist. Die Spannzange 16 ist bionisch dimensioniert, um einen idealen Kraftfluss zu erreichen.

Zum Öffnen der Verriegelungseinrichtung 15 wird dem Zylinderraum 48, der in Fig. 4 auf der linken Seite der Entriegelungsstange 55 angeordnet ist, mit Druck beaufschlagt. Dadurch bewegt sich die Entriegelungsstange 55 in Fig. 4 nach rechts in eine Position gemäß Fig. 3, wodurch das Druckstück 39 wieder an dem Kantenzug 16dder Spannzange 16 zur Anlage kommt und dadurch die Verzahnung 16b der Spannzange 16 radial nach außen drückt und damit außer Eingriff mit der Verzahnung des betätigbaren Abschnitts 14a des Kraftübertragungselements bzw. der Holme 14 bringt. Der Kantenzug 16d ist dabei so ausgebildet, dass das Druckstück 39 allmählich entlang einer Kurve zunächst am Spannkonus 16a sanft in Anlage kommt, dann mit leichter Kraft eine radial nach außen gerichtete Bewegung aus der Verzahnung harmonisch einleitet und am Ende einen ausreichenden Abstand zu Aus- bzw. Einfahren der Holme zu Verfügung stellt.

Fig. 3 zeigt, dass sich die Entriegelungsstange 55 in dieser Stellu8ng stirnseitig in geringem Anstand von der Stirnseite des Kraftübertragungselements bzw. Holms 14 befindet. Sollte sich daher die im Formspannraum R aufgenommene Spritzgießform M in dieser Stellung allein durch die Formfahreinrichtung 13 noch nicht öffnen, kann durch Erhöhen des Drucks im Zylinderraum 48 der Öffnungsvorgang der Spritzgießform M im Sinne eines Hochdrucköffnens zusätzlich unterstützt werden, wobei die Stirnseite der Entriegelungsstange 55 dann auf die Stirnseite des Holms 14 drückt.

Fig. 5a zeigt einen Schnitt gemäß Linie Va-Va von Fig. 8 durch die Verriegelungseinrichtung 15. Der Schnitt ist so gelegt, dass im vorderen Teil der Entriegelungsstange 55 die Schmierstoffplatte 55a geschnitten wird und im Übrigen der Schnitt aber durch einen Schlitz 16c zwischen den einzelnen Segmenten der Spannzange 16 geführt ist. In Fig. 8 ist erkennbar, dass in diesem Bereich vier dieser Schmierstoffplatten 55a vorgesehen sind, die im Schnitt jeweils einen Zentriwinkel von 90° abdecken und zwischen sich Schmierschlitze 37a aufweisen. Erkennbar ist in der Mitte der Fig. 5a, dass die Schiebehülse 20 über Befestigungsmittel an der Entriegelungsstange 55 des Druckstücks 39 befestigt ist. Im Inneren der Entriegelungsstange 55 läuft eine Schmierstoffzuleitung 54, über die zunächst über die Schmierung 38 der Anlagebereich zwischen dem Druckstück 39 und dem Spannkonus 16a der Spannzange 16 mit Schmierstoff versorgt wird. Der Schmierstoff kann sich in der Entriegelungsstange 55 aber auch in weitere Schmierkanäle 37 verzweigen, die für die Schmierung der beim Spannen ineinandergreifenden Verzahnung 16b der Spannzange und der Verzahnung des betätigbaren Abschnitts 14a des Holms 14 bestimmt sind. Diese Verzahnungen 14a, 16b können auch gewindeartig ausgebildet sein und dienen dem formschlüssigen Spanneingriff. Die Verzahnungen können alternativ oder ergänzend auch durch die im Detail Z der Fig. 5a in Fig. 5b vergrößert dargestellte Schmierung geschmiert werden. Bei der Bewegung des beweglichen Formträgers mittels der Formfahreinrichtung 13, 13' gelangen die Holme 14 mit ihren betätigbaren Abschnitten 14a durch die im stationären Formträger gelagerten Lagerhülsen 53 und von dort in die Bohrungen 45, in die die Spannzange 16 von der gegenüberliegenden Seite des Formträgers 10 eintaucht. Im Übergangsbereich zwischen Lagerhülse 53 und Bohrung 45 wird über die Schmierstoffzufuhr 50 Schmierstoff dem Reservoir 51 gemäß Fig. 5b zugeführt, von wo aus über einen Ringspalt ein Schmierstoffaustrag auf den betätigbaren Abschnitt 14a des Holms 14 erfolgt, während der Holm 14 der Spannzange zugeführt oder von ihr weggeführt wird. Damit lässt sich eine zuverlässige Schmierung dieses Bereichs umsetzen.

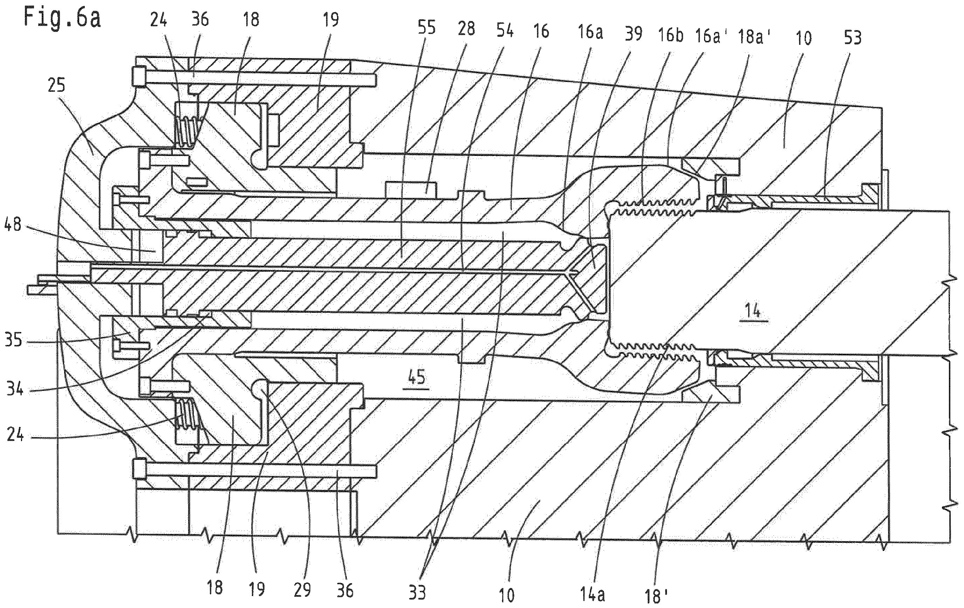

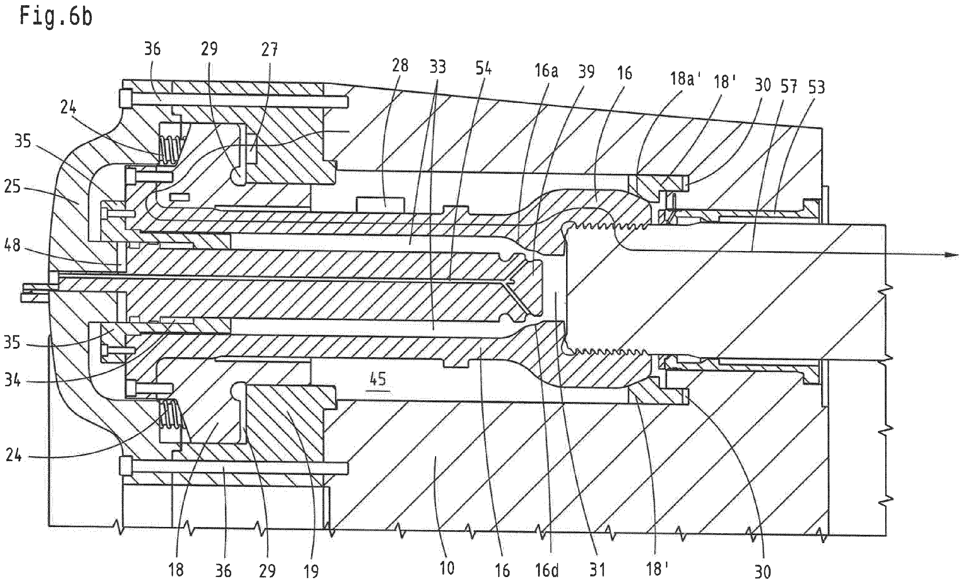

Die Fig. 6a, 6b zeigen ein alternatives zweites Ausführungsbeispiel der Verriegelungseinrichtung 15, in der die Spannzange aktiv öffnend, passiv schließend ausgebildet ist. Dabei werden in diesem Ausführungsbeispiel für gleiche Teile wie im ersten Ausführungsbeispiel der Fig. 3 bis 5b die gleichen Bezugszeichen verwendet. Insofern ist hier die linke Seite der Figur identisch zum ersten Ausführungsbeispiel. Auch hier ist der Kolben 18 als Hochdruckkolben aus dem Zylinderraum 29 beaufschlagbar. Der Kolben 18 ist im Zylinder 19 axial beweglich gelagert und mit der Spannzange 16 und der Gleithülse 35 als Bewegungseinheit verbunden, so dass die Spannzange schwimmend gelagert ist.

Ein Unterschied besteht jedoch auf der rechten Seite der Fig. 6a, 6b. In Fig. 6a ist das Druckstück 39 in Anlage an der unverformt geöffneten Spannzange 16 (aktiv öffnend). In dieser Stellung kann der betätigbare Abschnitt 14a in die Spannzange 16 eingeführt werden kann. Wird jetzt jedoch Fluid dem Zylinderraum 34 zugeführt, bewegt sich die Entriegelungsstange 55 mit dem Druckstück 39 in Fig. 6b relativ zur Spannzange 16 und zum Kolben 18 nach links. Gleichzeitig wird in Fig. 6b rechts am Grunde der die Spannzange 16 aufnehmenden Bohrung 45 des stationären Formträgers der weitere Kolben 18' aus dem Zylinderraum 30 heraus so mit der Spannzange 16 in Anlage gesteuert, dass der Konus 18a'am Spannkonus 16a' der Spannzange 16 zur Anlage kommt und damit die Spannzange 16 radial elastisch nach innen verformt, so dass ein Eingriff der Verzahnung 16b der Spannzange 16 in den betätigbaren Abschnitt 14a des Holms 14 erfolgt und die gewünschte Verriegelung stattfindet (passiv schließend). Der weitere Kolben 18' sichert dabei die Spannzange 16 zusätzlich gegen ein Öffnen, d.h. gegen eine radial nach außen gerichtete Bewegung der Spannzange 16 passiv, d.h. sie wird dazu verformt. Beim Öffnen dieser Verriegelungseinrichtung wird der Zylinderraum 30 entlastet. Die in der verriegelten Stellung elastisch radial nach innen verformte Spannzange 15 kann dann in ihre geöffnete Ausgangsstellung zurückgelangen. Diese Bewegung kann durch das Druckstück 39 unterstützt werden, grundsätzlich ist aber für die Entriegelung der Verriegelungseinrichtung nach dieser Ausführungsform das Druckstück nicht zwingend erforderlich.

Die Ausführungsbeispiele der Fig. 1 bis 6b haben den Vorteil, dass während des Spritzzyklus zur Herstellung von Spritzgießteilen die Holme "frei" gefahren werden können. Dies gestattet eine bedarfsweise uneingeschränkte Zugänglichkeit zum Formspannraum R.

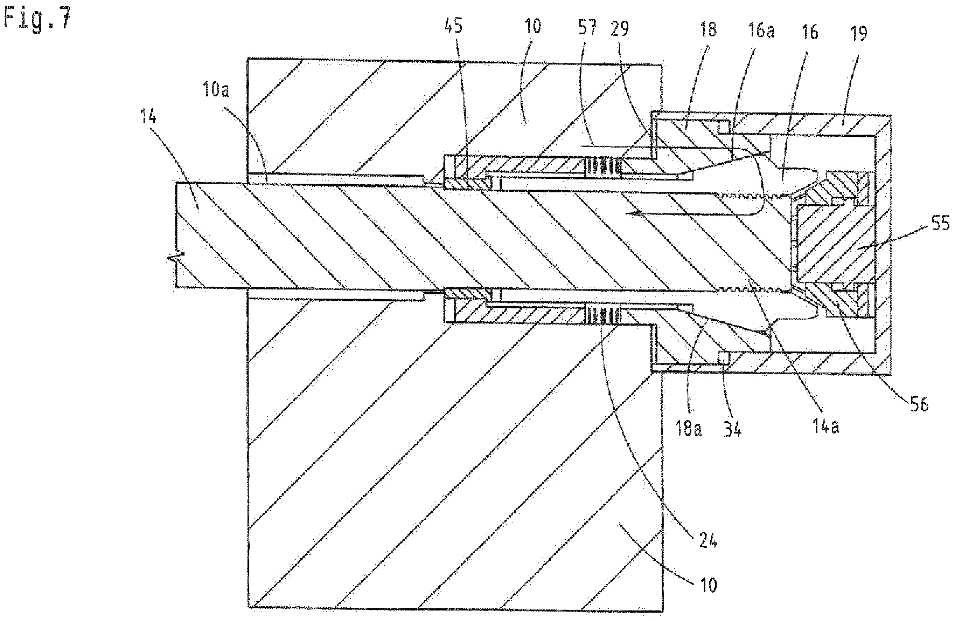

Fig. 7 zeigt in einem dritten Ausführungsbeispiel eine Anordnung bei der die Schließkraft auf andere Weise aufgebracht wird. Der Holm 14 wird in Fig. 7 von links mit seinem betätigbaren Abschnitt 14a durch die Aufnahmebohrung in den stationären Formträger 10 eingeführt und durch die Bohrung 45bis zur Spannzange 16 geführt. Zu diesem Zeitpunkt wird der Kolben 18 aus dem Zylinderraum 34 in Fig. 7 nach links gedrückt, so dass sich die Spannzange radial nach außen elastisch verformen kann. Über das in Fig. 7 rechts dargestellte Druckstück 56 lässt sich die Spannzange 16 dabei radial elastisch aufweiten. Wird der Druck im Zylinderraum 34 abgesenkt und/oder das Druckstück 56 nach rechts gefahren, drücken die Federn 24 den Kolben 18 in Fig. 7 nach rechts, so dass der Konus 18a des Kolbens am Konus 16a der Spannzange zur Anlage kommt und diese radial elastisch nach innen drückt, so dass die Verzahnung von Spannzange 16 und betätigbarem Abschnitt 14a des Holms 14 formschlüssig verriegelnd ineinandergreifen. In dieser verriegelten Stellung kann aus dem Zylinderraum 29 die Schließkraft aufgebracht werden. Der Kraftfluss beim Aufbringen der Schließkraft erfolgt bei diesem Ausführungsbeispiel gemäß der Linie 57 vom stationären Formträger 10 über den Kolben 18 auf die Spannzange 16 und über die Verzahnungen auf den Holm 14.

Wird Zylinderraum 34 mit Druck beaufschlagt, wird der Kolben 18 nach links gedrückt. Über die Federn 24 wird die Spannzange 16 in die Nulllage geschoben. In dieser Position ergibt sich ein Spalt im Konusbereich von der Spannzange 16 und dem Kolben 18. Über Druckstück 56 lässt sich die Spannzange spreizen und diese gibt den Freiraum für das Einfahren vom Holm (Kraftübertragungselement) frei.

Fährt man Druckstück 56 zurück, schließt sich die Spannzange 16 und die Verriegelung zwischen betätigbarem Abschnitt 14a und der Verzahnung 16b erfolgt. Beim Kraftaufbau wird Zylinderraum 29 beaufschlagt, der Kolben 18 fährt vor und schiebt über den Konus 18a und 16a die Spannzange nach rechts und erzeugt den Hochdruck. Der Vorteil dieser Variante liegt darin, dass gemäß der Linie 57 der Kraftfluss nicht über die gesamte Spannzange geht sondern direkt vom Kolbenkonus 18a auf den Spannzangenkonus 16a und von dort über die Verzahnung in den Holm (geringere Belastung für das Spannzangen-Bauteil).

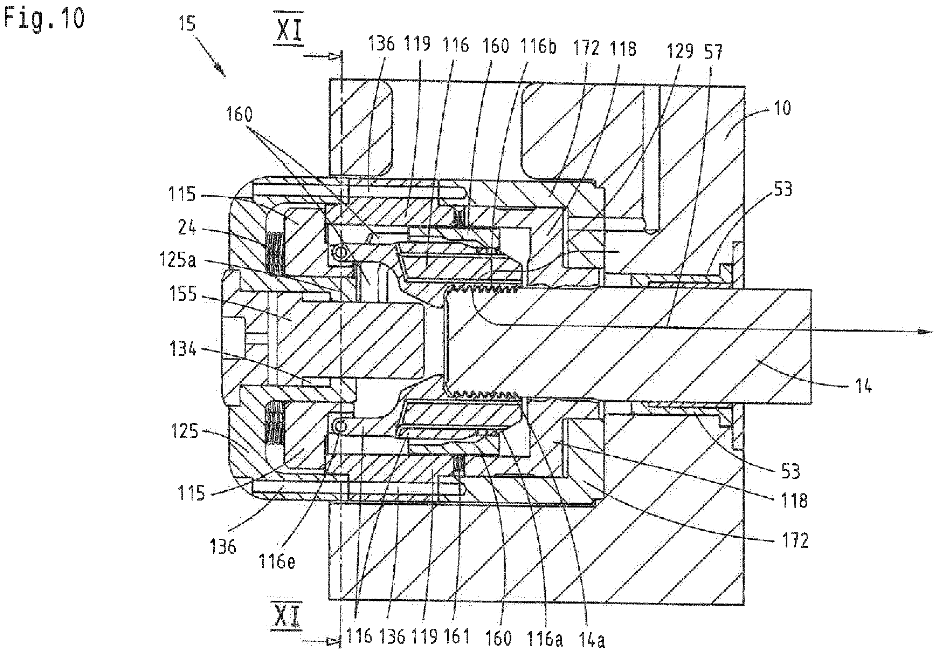

Fig. 10 bis 14 zeigen ein weiteres viertes Ausführungsbeispiel der Verriegelungseinrichtung 15, in der die Spannzange 116 mehrteilig ausgebildet ist und gelenkig gelagerte Spannelemente aufweist. Grundsätzlich werden bei diesem als auch beim nächsten fünften Ausführungsbeispiel die Bezugszeichen wie in den ersten drei Ausführungsbeispielen verwendet, die allerdings für dieses Ausführungsbeispiele um 100 erhöht sind.

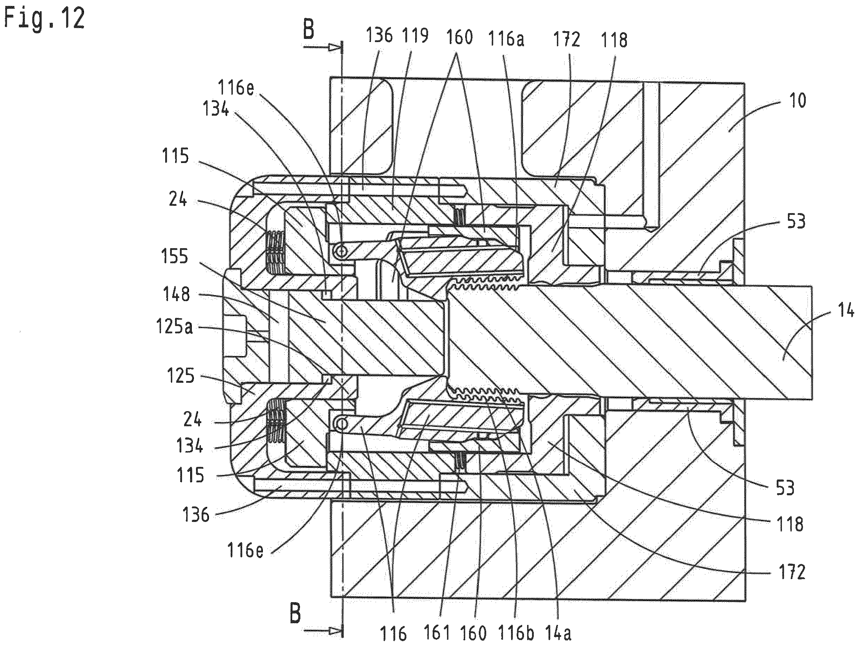

Vom Aufbau her zeigen Fig. 10 und 12 den Formträger und zwar den stationären Formträger 10, in dem in einer Lagerhülse 53 ein Kraftübertragungselement in Form eines Holms 14 lösbar aufgenommen ist. Der Holm 14 weist an seinem in Fig. 10 in der Mitte befindlichen Ende einen betätigbaren Abschnitt 14a in Form einer Verzahnung auf. Am stationären Formträger 10 ist die Verriegelungseinheit 15 befestigt, die ein in die Bohrung des stationären Formträgers eintauchendes Lagerstück 172 umfasst, an dem Zylinder 119 und Zylinderdeckel 125 der Verriegelungseinrichtung 15 über Befestigungsmittel 136 befestigt sind. Das Lagerstück 172 bildet gleichzeitig den Zylinder, in dem der Kolben 118 aufgenommen ist. Es selbst ist ebenfalls über Befestigungselemente am stationären Formträger 10 befestigt, das heißt die in sich geschlossene Baugruppe Verriegelungseinrichtung 15 kann über diese Befestigungsmittel am stationären Formträger 10 befestigt werden, was insbesondere Herstellung und Wartung der Spritzgießmaschine erleichtert.

Der Zylinderdeckel 125 weist eine Anformung 125a auf, in der ein Entriegelungselement 155 vergleichbar der Entriegelungsstange 55 der ersten beiden Ausführungsbeispiele aufgenommen ist. Ein Vergleich zwischen den Fig. 10 und 12 macht deutlich, dass das Entriegelungselement 155 durch Aufbringen von Druck im Zylinderraum 134 in Fig. 10 nach links und durch Aufbringen von Druck im Zylinderraum 148 in Fig. 12 nach rechts bewegt werden kann.

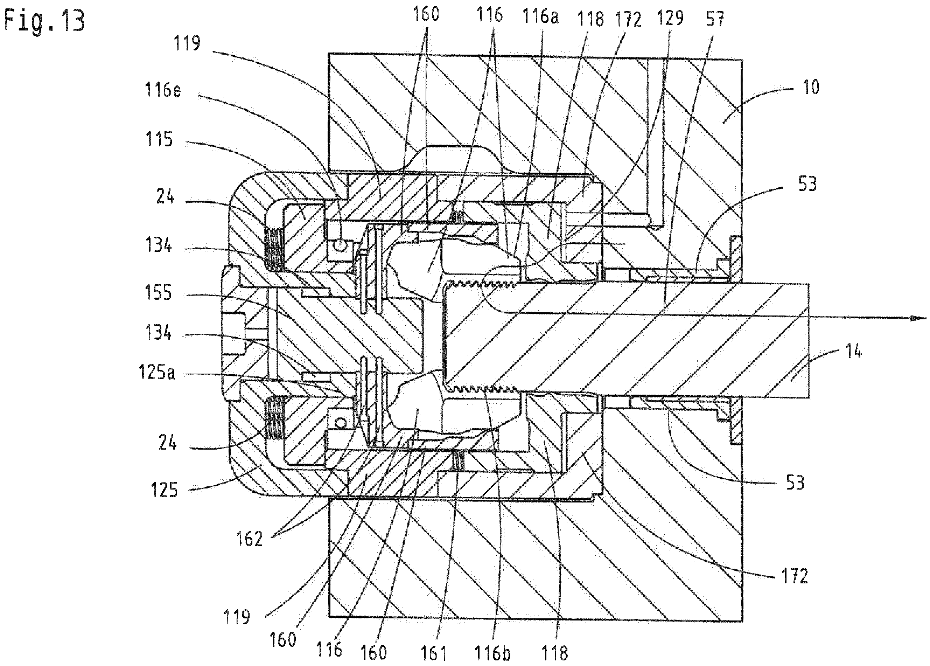

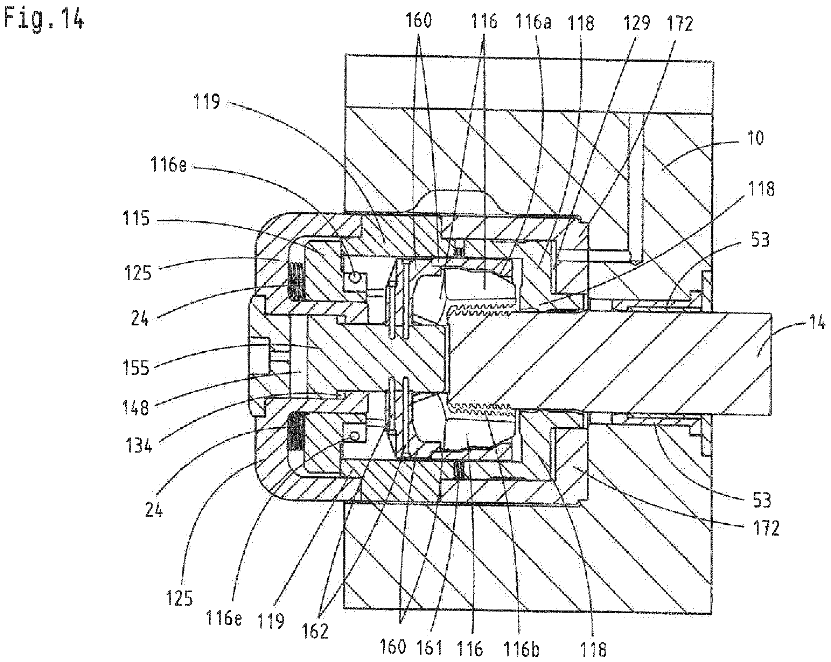

Mit dem Entriegelungselement 155 über Befestigungsmittel gemäß Fig. 13 verbunden ist ein Betätigungselement 160 das gemäß Fig. 14 radial nach außen bis zur Zylinderwandung des Zylinders 119 geführt ist. Dieses Betätigungselement 160 wird bei Betätigung des Entriegelungselements 155 in axialer Richtung des Kraftübertragungselements bewegt, wobei bei Bewegung des Entriegelungselements 155 aus der Position in Fig. 10 in die Position gemäß Fig. 12 nach rechts auch das Betätigungselement 160 nach rechts bewegt wird. Diese Betätigung erfolgt relativ zur Spannzange bzw. den Spannelementen 116, die ihrerseits über das quer zur Schließrichtung angeordnete Gelenk 116e am Lagerelement 115 gelagert sind. Das Lagerelement 115 ist seinerseits wiederum in Richtung auf den Zylinderdeckel 125 durch ein elastisches Element in Form der Feder 24 abgestützt und ansonsten radial an der Anformung 125a abgestützt. Gegen die Kraft der Feder 24 ist dieses Lageelement 115 an der Außenseite der Anformung 125a des Zylinderdeckels 125 beweglich geführt.

Fig. 10 zeigt die Spannelemente 116 im geschlossenen Zustand, das heißt die Verzahnung 116b greift in den betätigbaren Abschnitt 14a des Holms 14 ein. Diese Stellung wird dadurch erreicht, dass das Entriegelungselement 155 durch Aufbringen von Druck im Zylinderraum 134 in Fig. 10 nach links bis zum Anschlag gefahren ist und dadurch die mit ihm verbundenen Betätigungselemente 160 in Fig. 10 nach links bewegt hat. Dies führt dazu, dass ausgehend von Spannkonus 116a das Betätigungselement 160an der Außenseite des Spannelements 116 zur Anlage kommt und dieses in die Stellung gemäß Fig. 10 überführt. Wird in dieser verriegelten Stellung nun Druck im Zylinderraum 129 auf den Kolben 118 aufgebracht, bewegt sich dieser gegen die Kraft des elastischen Elements 161 und bewirkt dadurch, sobald der Kolben 118 am Spannelement zur Anlage kommt, das Aufbringen der Schließkraft. Um das Spannelement 116 außer Wirkeingriff mit dem Kraftübertragungselement zu bringen, wird Druck im Zylinderraum 148 aufgebracht. Dies führt dazu, dass sich das Entriegelungselement 155 in Fig. 12 nach rechts bewegt, wobei auch das Betätigungselement 160 sich nach rechts bewegt und dadurch einen Freiraum für die Bewegung des Spannelements 116 schafft. Gleichzeitig gelangt der stirnseitige Bereich des Entriegelungselements 155 ebenfalls in Anlage am radial innenseitigen Ende des Spannelements 116 und drückt dadurch die Spannelemente außer Eingriff mit dem betätigbaren Abschnitt 14a des Kraftübertragungselements. Mit dem elastischen Element 161 wird der Kolben118 nach dem Druckabbau im Zylinderraum 129 in die Ausgangsstellung zurückgedrückt.

Vorteilhafterweise erfolgt über den Hub des Entriegelungselements 155 eine zwangsgesteuerte Öffnungs- und Schließbewegung der Spannzange 116. Zudem kann bedarfsweise auch in diesem Ausführungsbeispiel ein Hochdruck-Öffnen mit Hilfe des auf den Holm 14 wirkenden Entriegelungselements 155 erfolgen.

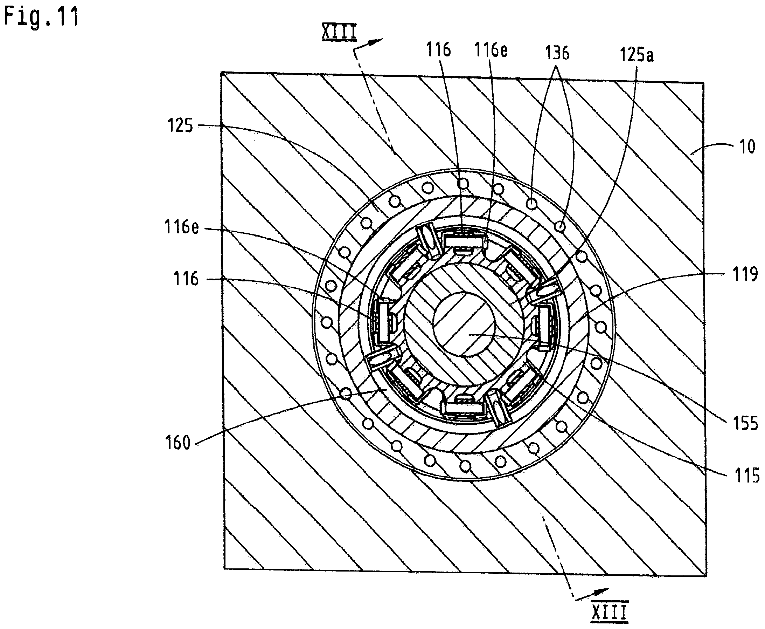

Fig.11 zeigt einen entsprechenden Schnitt durch die Anordnung im geschlossenen Zustand nach Linie XI-XI von Fig. 10. Zu erkennen ist, dass mehrere Spannelemente als auch Betätigungselemente, im Winkel von im Ausführungsbeispiel jeweils 90 Grad abgestützt, vorgesehen sind, die radial zum in der Mitte liegenden Entriegelungselement 155 angeordnet sind. Die Abstützungen und das Betätigungselement 160 sind mit dem Entriegelungselement 155 gekoppelt, z.B. verschraubt). Die Führung dieser Elemente erfolgt über das Entriegelungselement 155. Fig. 13 und 14 zeigen die Befestigung der Betätigungselemente 160 an dem Entriegelungselement 155, wobei in diesem Schnitt die Spannelemente 116 nicht geschnitten sind.

Der Kraftfluss geht direkt vom Kolben 118 über die Verzahnung 116b in den betätigbaren Abschnitt 14a und damit in die Kraftübertragungselemente, Dies führt zu einer einfachen Krafteinleitung mit optimierter Spannungsbelastung auf das Spannelement 116 durch eine reine Druckkraftübertragung.

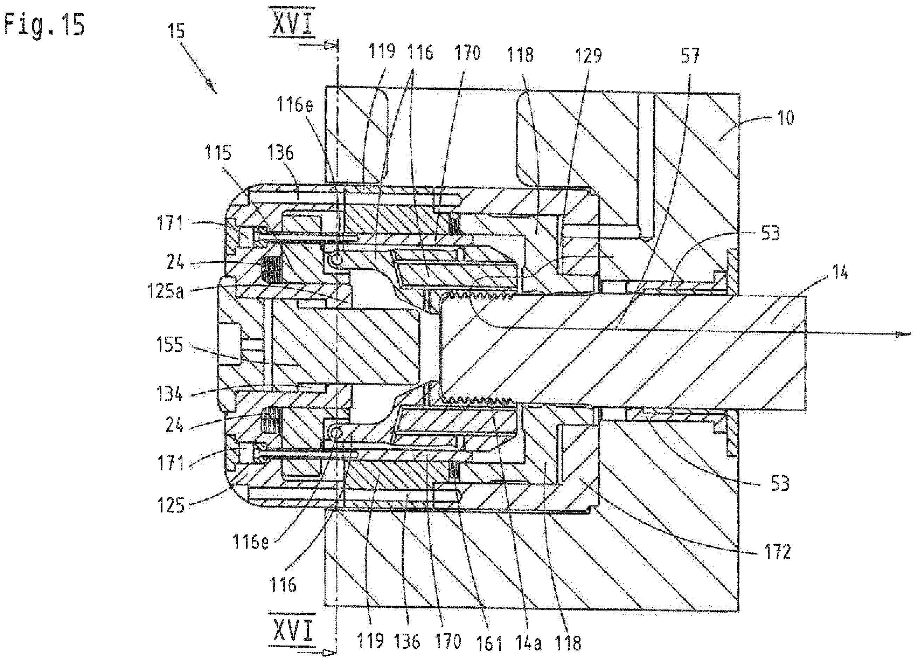

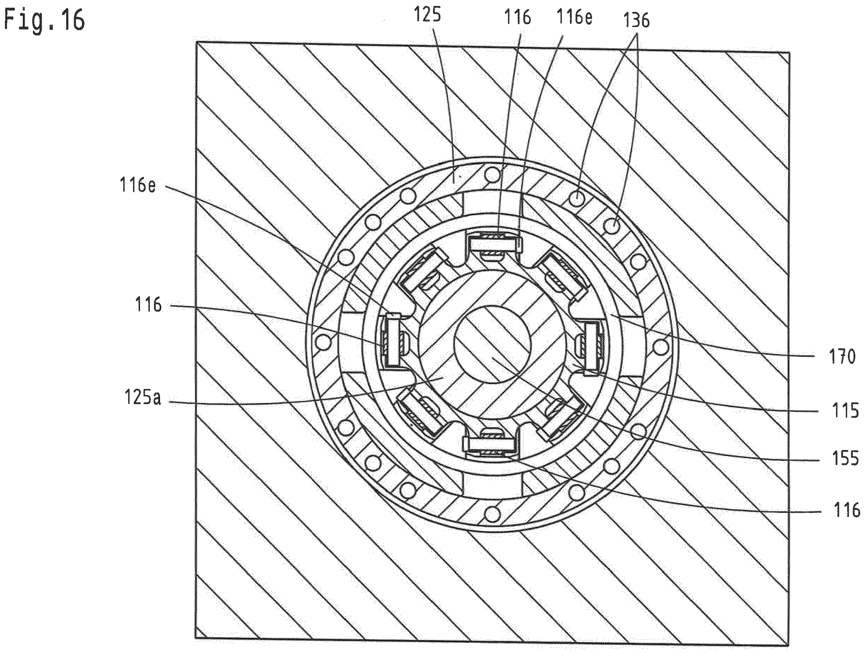

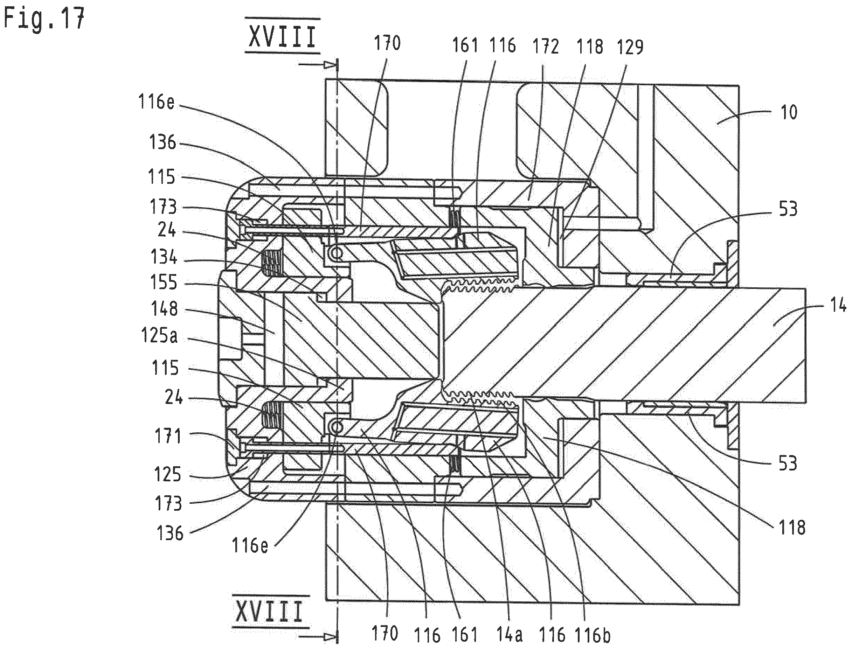

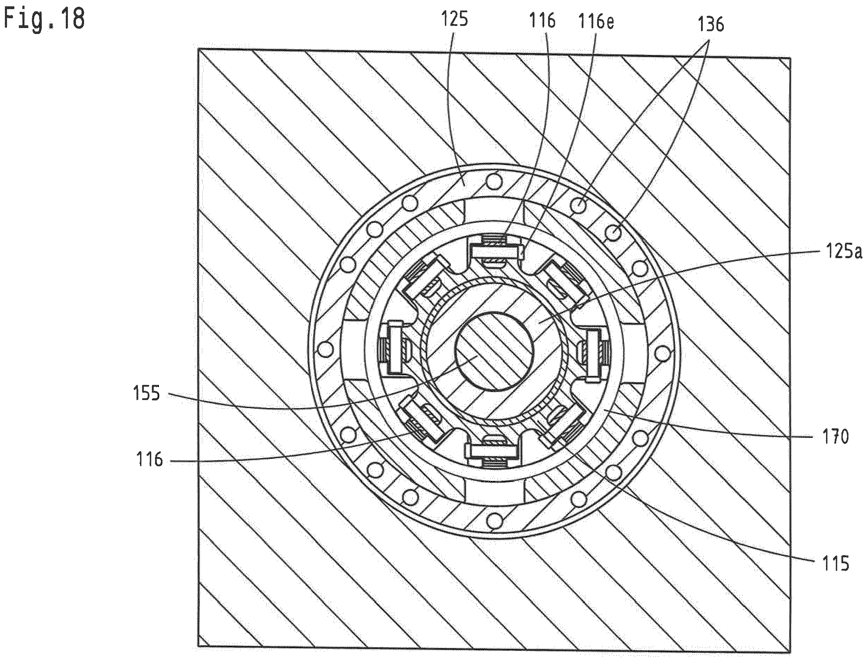

Grundsätzlich zeigt das fünfte Ausführungsbeispiel der Figuren 15 bis 18 einen vergleichbaren Aufbau zum vierten Ausführungsbeispiel, weshalb auch weitestgehend die gleichen Bezugszeichen verwendet werden. Bei einem Blick auf die geschlossene Position der Verriegelungseinrichtung gemäß Fig. 15 bzw. die geöffnete Position gemäß Fig. 17 ist zu erkennen, dass bei dieser Ausführungsform gegenüber zum Beispiel Fig. 10 ein Betätigungselement 160 nicht verwendet wird. Die Anordnung von Holm 14 im Formträger 10 sowie von Lagerstück 172, Zylinder 119, Zylinderdeckel 125 und Entriegelungselement 155 ist zwar gleich und auch die Spannelemente 116 sind grundsätzlich über ihr Gelenk 116e vergleichbar angeordnet, ergänzend ist jedoch eine Schiebehülse 170 vorgesehen, die aus dem Zylinderraum 171 beaufschlagbar und damit aus der Position links in Fig. 17 in die Position rechts in Fig. 15 überführbar ist. Die Federn 161 drücken den Kolben118 in die Endlage, damit das Spannelement 116 sich frei öffnen kann. In der geschlossenen verriegelten Position der Verriegelungseinrichtung gemäß Fig. 15 ist das Entriegelungselement 155 durch Druck in Zylinderraum 134 nach links gefahren. Dadurch besteht zunächst vor dem Entriegelungselement 155 ein Freiraum, in den die radial innenliegende Flächen der Spannelemente 116 eintauchen können. Gleichzeitig kann nun unabhängig vom sonstigen Mechanismus durch Druck im Zylinderraum 171 die Schiebehülse 170 in Fig. 15 nach rechts bewegt werden und kommt dadurch zur Anlage an der Außenseite des Spannelements 116, sodass das Spannelement 116 durch die Schiebehülse 170 in der verriegelten Position fixiert wird. Damit wird der Eingriff der Verzahnung 116b in die Verzahnung des betätigbaren Abschnitts 14a sichergestellt. In dieser Position kann wieder aus dem Zylinderraum 129 Druck auf den Kolben 118 zur Erzeugung der Schließkraft aufgebracht werden. Dabei ist das Lagerelement 115, an dem das Spannelement 116 über das Gelenk 116e gelagert ist, nur gegen die Kraft der Feder 24 axial, das heißt in Richtung des Kraftübertragungselements bewegbargelagert. In Fig. 15 nach rechts gibt es einen harten Anschlag am Kolben 119. Die Federn 24 drücken das Lagerelement 115 (mit den Spannelementen 116) im hydraulisch unbelasteten Zustand nach rechts an den Anschlag am Kolben 119. Somit wird immer eine theoretisch optimale Fügeposition zwischen Kraftübertragungselement (Holm 14) und Spannelement 116 erreicht. Fährt das Kraftübertragungselement in das Spannelement 116 mit "Überlauf" ein (z.B. aufgrund falsch eingestellter Formhöhe), dämpfen die Federn 24 die Stoßbelastung und schützen somit die Bauteile.

Zum Entriegeln der Verriegelungseinrichtung gemäß Fig. 15 wird gemäß Fig. 17 Druck im Zylinderraum 148 aufgebracht, wodurch das Entriegelungselement 155 in Fig. 17 nach rechts bewegt wird. Es kommt damit stirnseitig gegebenenfalls in Anlage am Holm 14, sodass durch weiteren Druck im Zylinderraum 148 ein Hochdrucköffnen möglich wird, wie dies bereits bei den anderen Ausführungsbeispielen beschrieben wurde. Gleichzeitig hat das Entriegelungselement 155 in der Stellung gemäß Fig. 17 bereits die radial innenliegenden Enden der Spannelemente 116 radial nach außen verdrängt, sodass sich eine Position der Spannelemente 116 beabstandet vom Holm 14 ergibt. Dies ist allerdings nur möglich, weil gleichzeitig die zylinderbetätigte Schiebehülse 170 ebenfalls durch Druck im Zylinderraum 173 in Fig. 17 nach links gefahren wurde, sodass die Schiebehülse 170 jetzt in einem entsprechenden Freiraum an der Außenseite des Spannelements 116 zu liegen kommt.

Der Aufbau sorgt grundsätzlich in den Ausführungsbeispielen dafür, dass nach dem Verriegeln der Spannzange 16 der weitere Kraftfluss im Wesentlichen nur noch über die Spannkonen 16a, 18a' und die zugeordneten Gegenkonen erfolgt, so dass die Spannzange 16 selbst aus dem Kraftfluss beim Aufbringen der Schließkraft meist ausgekoppelt ist. Der Kraftfluss geht im Ausführungsbeispiel der Fig. 3-6 über die Spannzange und führt dabei zu einer hohen Spannungsbelastung im Bauteil, was eine deutlich komplexere Auslegung der Elemente erfordert. Beim Ausführungsbeispiel der Fig. 10-18 wird der Kraftfluss hingegen als reine Druckbelastung in die Spannzange eingebracht, was zu einer geringeren Belastung der Elemente beiträgt. Der Kraftfluss läuft hier vom Kolben 118 über die vertikale Anlagefläche in das Spannelement 116, von dort über die Verzahnung ins Kraftübertragungselement.

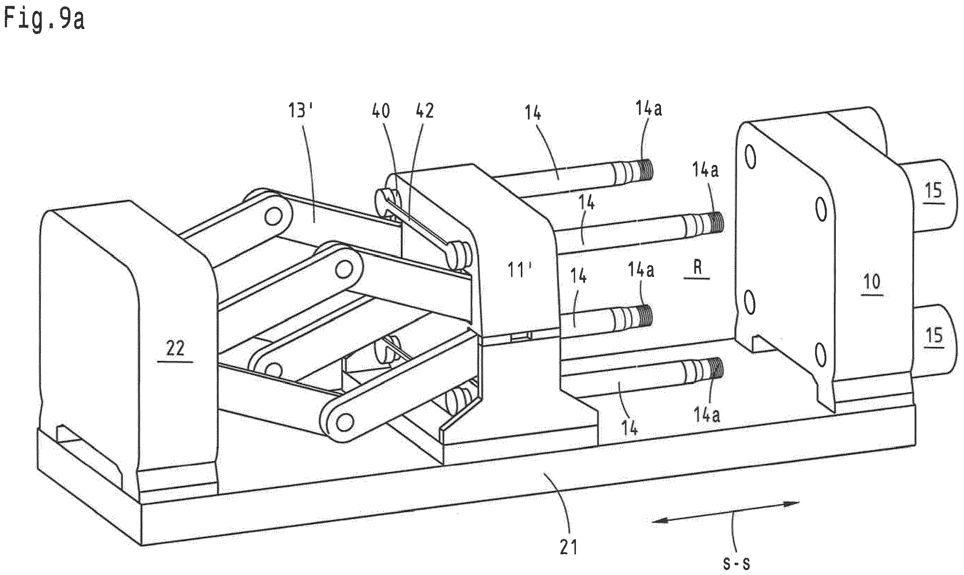

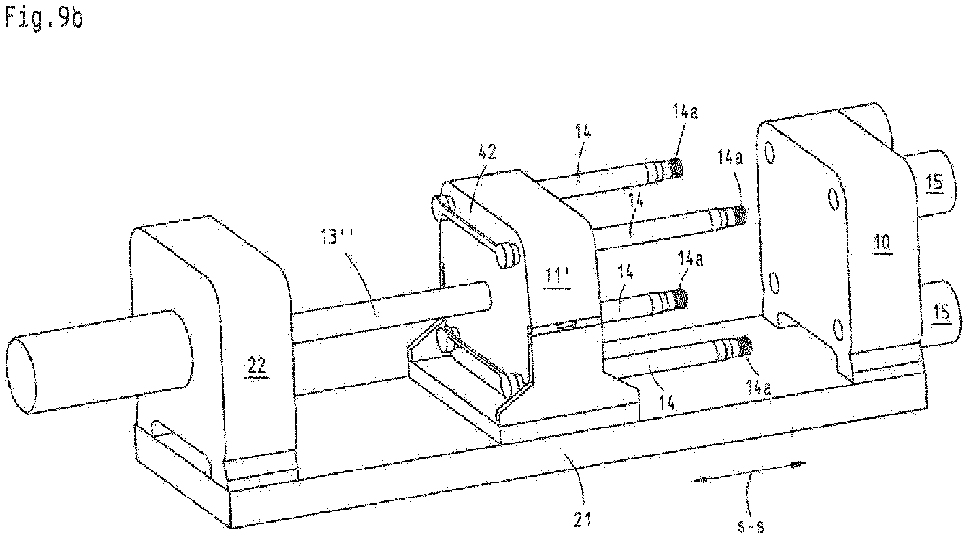

Während die bisherigen Ausführungsbeispiele die Formschließeinheit einer Zwei-Platten-Maschine zeigen, sind in den Fig. 9a, 9b Ausführungsbeispiele an einer Drei-Platten-Maschine dargestellt. Im Unterschied zu den bisherigen Ausführungsbeispielen wird bei einer Drei-Platten-Maschine ein Abstützelement vorgesehen, an dem sich die Formfahreinrichtung 13', 13" abstützt. Dabei handelt es sich bei der Formfahreinrichtung 13' der Fig. 9a um einen Kniehebelmechanismus und bei der Formfahreinrichtung 13" in Fig. 9b um eine hydraulische Antriebseinheit. Die Schließkraft wird vorzugsweise alleine oder ergänzend von der Kolben-Zylinder-Einheit in der Verriegelungseinrichtung 15 aufgebracht.

Verfahrensgemäß wird in sämtlichen Ausführungsbeispielen die Spannzange schwimmend gelagert. Der betätigbare Abschnitt 14a des Kraftübertragungselements wird beim Formschluss der Teile der Spritzgießform M an einem der Formträger 10, 11, 11' formschlüssig mittels der Verriegelungseinrichtung 15 verriegelt. Im so verriegelten Zustand wird dann über das Kraftübertragungselement die Schließkraft übertragen. Das Kraftübertragungselement ist mittels der wenigstens einen Spannzange schwimmend gelagert, wobei meist mehrere Kraftübertragungselemente am jeweiligen Formträger vorgesehen sind, sodass eine entsprechende Anzahl von Spannzangen 16, 116 vorgesehen ist. Die schwimmend gelagerte Spannzange 16, 116, ist innerhalb der Verriegelungseinrichtung zugleich mit einem Kolben 18, 118 einer Kolbenzylindereinheit 17 verbunden, um die Schließkraft aufzubringen. Dadurch kann aus ein und derselben Baugruppe heraus sowohl die Verriegelung erfolgen als auch die Aufbringung der Spannkraft erfolgen, sodass auch bei hohen Kräften eine zuverlässige und schnelle Erzeugung der Schließkraft möglich ist.

Die Spannzange 16, 116 wird zwangsgeführt mit dem Kraftübertragungselement verriegelt, wobei im verriegelten Zustand mittels des Kolbens 18, 118 ein Hochdruck zur Erzeugung der Schließkraft erzeugt wird. Zur Zwangsführung ist die Spannzange 16 mittels eines Druckstücks 39 in den ersten beiden Ausführungsbeispielen betätigbar. Das Druckstück ist an einem zentral zur Spannzange angeordneten Entriegelungselement in Form der Entriegelungsstange 55 angeordnet und führt bei Betätigung zur radial elastischen Verformung der Spannzange 16.

Der Kolben 18 zur Erzeugung der Schließkraft ist über die Spannzange 16 mit wenigstens einer durch eine Gleithülse gebildeten Lagerung 35 an einer zentrisch in der Spannzange 16 angeordneten, als Entriegelungselement ausgebildeten Entriegelungsstange bewegbar. Dadurch wird einerseits die Führung des Kolbens 18 als auch der Entriegelungsstange 55 sichergestellt. Aber auch das Entriegelungselement 55, 155 wird beweglich geführt, in dem es sich im Wesentlichen am Zylinder 25, 125 entweder mittelbar oder unmittelbar abstützt Die Lagerung der Komponenten erfolgt von außen nach innen. Das Entriegelungselement wird in der Gleithülse 35 geführt und die Gleithülse stützt sich über die Spannzange 16 und den Kolben 18 am Zylinder 19 ab.
Bei den ersten beiden Ausführungsbeispielen ist dazu eine Gleithülse 35 vorgesehen, entlang der sich das Entriegelungselement 55 bewegt. Bei den beiden letzten Ausführungsbeispielen gemäß den Figuren 10 bis 18 weist der Zylinderdeckel 125 eine Anformung 125a auf, entlang der das Entriegelungselement 155 relativ zum Zylinderdeckel 125 beweglich geführt wird.

Grundsätzlich kann die Verriegelungseinrichtung aktiv schließend oder aktiv öffnend ausgebildet werden. Im Ausführungsbeispiel der Figuren 3, 4 ist die Spannzange 16 aktiv schließend, das heißt im unverformten Zustand besteht bei entsprechender Positionierung des betätigbaren Abschnitts 14a des Kraftübertragungselements ein Wirkeingriff zwischen der Verzahnung 16b der Spannzange mit der Verzahnung des Holms 14. Im radial elastisch verformten und damit passiv geöffneten Zustand weist die Spannzange 16 dann eine Aufnahmeöffnung auf, in die der betätigbare Abschnitt 14a des Kraftübertragungselements eingeführt wird. Nach diesem Einführen wird die radiale Verformung der Spannzange 16 aufgehoben und dadurch die Spannzange aktiv schließend und lösbar, gleichzeitig aber auch formschlüssig mit dem Kraftübertragungselement verbunden. Alternativ kann die Spannzange 16 aber auch im zweiten Ausführungsbeispiel der Fig. 6a, 6b so ausgebildet werden, dass sie im geöffneten Zustand radial unverformt ist. In die dann bestehende Aufnahmeöffnung kann wieder der Holm 14 eingeführt werden. Anschließend wird die Spannzange 16 radial nach innen elastisch verformt und dadurch die Spannzange 16 passiv schließend und lösbar, gleichzeitig aber auch formschlüssig mit dem Kraftübertragungselement verbunden.

Bei einer Lösung nach dem vierten und fünften Ausführungsbeispiel kommt es nicht zu einer radialen Verformung der Spannzange 116. Die Spannzange 116 ist vielmehr mehrteilig aufgebaut und weist quer zur Schließrichtung drehbeweglich gelagerte Spannelemente auf. Diese Spannelemente werden an einem Lageelement 115 gelagert und entweder mittels eines mit einem Entriegelungselement 155 verbundenen Betätigungselement 160 (Fig. 10 bis 14) oder mittels einer Schiebehülse 170, die unabhängig von der Spannzange betätigbar ist (Fig. 15 bis 18) in und außer Wirkeingriff mit dem Kraftübertragungselement gesteuert.

Vorzugsweise weist das Entriegelungselement 55,155 in den Ausführungsbeispielen eine Doppelfunktion auf. Zum einen wird es zum Öffnen der Spannzange 16, 116 aus einem Zylinderraum 48, 148 beaufschlagt. Zum anderen ist es so angeordnet, dass es im geöffneten Zustand der Spannzange stirnseitig zum Anliegen des Entriegelungselements 155an einem als Kraftübertragungselement ausgebildeten Holm 14 kommt. In dieser Position kann bei einem weiteren Druckaufbau im Zylinderraum 48, 148 die Spritzgießform M gegebenenfalls mit Hochdruck geöffnet werden.

**Bezugszeichenliste**

| | | | |
|---|---|---|---|
| 10 | stationärer Formträger | 35 | Gleithülse |
| 10a | Aufnahmebohrung | 36, 136, | 162 Befestigungsmittel |
| 11, 11' | beweglicher Formträger | 7, 37' | Schmierkanal |
| 11a | Tischschlitten | 37a | Schmierschlitz |
| 12 | Abstützelement | 38 | Schmierung Druckstück |
| 13,13',13" | Formfahreinrichtung | 39 | Druckstück |
| 14 | Holm | 40 | Mutter |
| 14a | betätigbarer Abschnitt | 41 | Motor |
| 14b | Gewindeabschnitt | 42 | Formhöhenverstelleinrichtung |
| 15 | Verriegelungseinrichtung | 45 | Bohrung |
| 16 | Spannzange | 50 | Schmierstoffzufuhr |
| 16a,16a' | Spannkonus | 51 | Reservoir |
| 16b | Verzahnung | 52 | Schmierstoffaustrag |
| 16c | Schlitz | 53 | Lagerhülse |
| 16d | Kantenzug | 54 | Schmierstoffzuleitung |
| 17 | Kolben-Zylinder-Einheit | 55 | Entriegelungsstange |
| 18, 118 | Kolben | 55a | Schmierplatten |
| 18' | weiterer Kolben | 56 | Druckstück |
| 18a,18a' | Konus | 57 | Kraftfluss |
| 19, 119 | Zylinder | 115 | Lagerelement |
| 20, 170 | Schiebehülse | 116 | Spannbacke |
| 21 | Maschinenständer | 116a | Spannkonus |
| 22 | Abstützelement | 116b | Verzahnung |
| 23 | Wegmessung | 116e | Gelenk |
| 24, 161 | Feder | 125a | Anformung |
| 25, 125 | Zylinderdeckel | 129, 134 | |
| 26 | Schließkraftsensor | 148, 171 | Zylinderraum |
| 27 | Druckmessung Fluid | 155 | Entriegelungselement |
| 28 | Dehnungsmessstreifen | 160 | Betätigungselement |
| 29, 30, 34 | Zylinderraum | 172 | Lagerstück |
| 48 | Zylinderraum | 173 | Zylinderraum |
| 31 | Freiraum | M | Spritzgießform |
| 32 | Ringraum | R | Formspannraum |
| 33 | Anlagebereich | s-s | Schließrichtung |

## Patentansprüche

1. Formschließeinheit für eine Spritzgießmaschine zur Verarbeitung von Kunststoffen und anderer plastifizierbarer Massen mit
- einem stationären Formträger (10),
- einem relativ zum stationären Formträger (10) beweglichen Formträger (11, 11'), der zwischen sich und dem stationären Formträger (10) einen Formspannraum (R) zur Aufnahme von Spritzgießformen (M) bildet und entlang einer Schließrichtung (s-s) zum Schließen und Öffnen der Spritzgießform (M) beweglich ist,
- einer Formfahreinrichtung (13, 13') zum Überführen des beweglichen Formträgers (11, 11') in und außer Formschluss der zwischen den Formträgern (10, 11; 11') aufgenommenen Teile einer Spritzgießform (M),
- wenigstens einem Kraftübertragungselement, das mit einem der Formträger (11, 11'; 10) verbunden und an seinem von dem einen der Formträger (11, 11'; 10) beabstandeten Ende einen dem anderen der Formträger (10; 11, 11') zugeordneten für einen Wirkeingriff betätigbaren Abschnitt (14a) aufweist,
- wenigstens einer dem anderen Formträger (10; 11, 11') zugeordneten Verriegelungseinrichtung (15), die bei dem Formschluss der Teile der Spritzgießform (M) zum Aufbringen einer Schließkraft mit dem betätigbaren Abschnitt (14a) in formschlüssige Wirkverbindung überführbar ist,
- wobei die Verriegelungseinrichtung (15) wenigstens eine schwimmend gelagerte Spannzange (16, 116) aufweist, die zur Verriegelung von Kraftübertragungselement und dem anderen der Formträger (10; 11, 11') beim Formschluss mit dem betätigbaren Abschnitt (14a) in formschlüssige Wirkverbindung überführbar ist und die zugleich mit wenigstens einem Kolben (18, 118) einer Kolben-Zylinder-Einheit (17) zum Aufbringen der Schließkraft verbunden ist
**dadurch gekennzeichnet, dass** die Verriegelungseinrichtung (15) wenigstens ein in der Spannzange angeordnetes Entriegelungselement (55) und einen das Entriegelungselement (55, 155) zum Öffnen der Spannzange (16, 116) beaufschlagbaren Zylinderraum (48, 148) aufweist und
dass beim stirnseitigen Anliegen des Entriegelungselements (55, 155) am Holm (14) aus diesem Zylinderraum (48, 148) ein Hochdrucköffnen der Spritzgießform (M) bewirkbar ist.

2. Formschließeinheit nach Anspruch 1, **dadurch gekennzeichnet, dass** die Spannzange (16, 116) und der Kolben (18, 118) Teile einer in sich geschlossenen Baugruppe sind.

3. Formschließeinheit nach Anspruch 1 oder 2, **dadurch gekennzeichnet, dass** die Spannzange (16, 116) zwangsgeführt mit dem Kraftübertragungselement verriegelbar ist und im verriegelten Zustand mittels des Kolbens (18, 118) ein Hochdruck zur Erzeugung der Schließkraft erzeugbar ist.

4. Formschließeinheit nach einem der vorhergehenden Ansprüche, **dadurch gekennzeichnet, dass** der Kolben (18, 118) zum Aufbringen der Schließkraft gegen die Kraft elastischer Elemente (Feder 24, 124, 161) betätigbar ist.

5. Formschließeinheit nach einem der vorhergehenden Ansprüche, **dadurch gekennzeichnet, dass** das Entriegelungselement (55) bei der Verriegelung an seinem der formschlüssigen Wirkverbindung benachbarten Ende ein bei Anlage an der Spannzange (16) eine radiale elastische Verformung der Spannzange bewirkendes Druckstück (39) aufweist.

6. Formschließeinheit nach Anspruch 5, **dadurch gekennzeichnet, dass** das Entriegelungselement (55, 155) innerhalb einer als Lagerung ausgebildeten Gleithülse (35) oder einer als Lagerung ausgebildeten Anformung (125a) relativ zu einem Zylinderdeckel (25, 125) beweglich an diesem geführt ist.

7. Formschließeinheit nach einem der vorhergehenden Ansprüche, **dadurch gekennzeichnet, dass** die über einen Zylinder (19) für den Kolben (18) am Formträger axial beweglich gelagerte Spannzange (16) im radial elastisch verformten, geöffneten Zustand eine Aufnahmeöffnung zum Einführen eines von der Spannzange betätigbaren Abschnitts (14a) des Kraftübertragungselements aufweist (Fig. 3, 4) oder im radial unverformten, geöffneten Zustand eine Aufnahmeöffnung zum Einführen eines von der Spannzange (16) betätigbaren Abschnitts (14a) des Kraftübertragungselements aufweist (Fig. 6a, 6b)..

8. Formschließeinheit nach Anspruch 7, **dadurch gekennzeichnet, dass** die Spannzange (16), die im radial elastisch verformten, geöffneten Zustand die Aufnahmeöffnung aufweist, aktiv schließend in einem radial unverformten Zustand mit einer Verzahnung (16a) in eine Verzahnung des betätigbaren Abschnitts (14a) eingreift oder die Spannzange (16), die im radial unverformten, geöffneten Zustand die Aufnahmeöffnung aufweist, passiv schließend in einem radial elastisch verformten Zustand mit der Verzahnung (16a) in die Verzahnung des betätigbaren Abschnitts (14a) eingreift.

9. Formschließeinheit nach einem der Ansprüche 5 bis 8, **dadurch gekennzeichnet, dass** eine an der als Entriegelungselement ausgebildeten Entriegelungsstange (55) radial befestigte Schiebehülse (20) vorgesehen ist, die in einem radial unverformten Zustand der Spannzange (16), die im radial elastisch verformten, geöffneten Zustand die Aufnahmeöffnung aufweist, mit einem Anlagebereich (33) der Spannzange (16) zur Sicherung der Spannzange gegen ein radiales Öffnen in Anlage kommt.

10. Formschließeinheit nach Anspruch 7, **dadurch gekennzeichnet, dass** die passiv schließende Spannzange (16) mittels eines stirnseitig an der Spannzange angreifenden weiteren Kolbens (18') im radial elastisch verformten Zustand fixierbar ist.

11. Formschließeinheit nach einem der vorhergehenden Ansprüche, **dadurch gekennzeichnet, dass** stirnseitig an der Entriegelungsstange (55) und/oder in einer Bohrung (10a) des Formträgers, in der ein Holm (14) als Kraftübertragungselemente aufnehmbar ist, eine Schmierstoffversorgung vorgesehen ist, die wenigstens eines der Elemente umfassend eine Schmierstoffzufuhr (50), ein Reservoir (51), einen Schmierstoffaustrag (52), eine Schmierstoffzuleitung (54), eine Schmierplatte (55aaufweist.

12. Formschließeinheit nach einem der Ansprüche 1 bis 6, 11, **dadurch gekennzeichnet, dass** die Spannzange (116) mehrteilig ausgebildet ist und quer zur Schließrichtung (s-s) drehbeweglich gelagerte Spannelemente aufweist, die an einem Lagerelement (115) gelagert sind und die entweder mittels eines mit einem Entriegelungselement (155) verbundenen Betätigungselement (160) (Fig. 10-14) oder mittels einer Schiebehülse (170) (Fig. 15-18) in und außer Wirkeingriff mit dem Kraftübertragungselement überführbar sind.

13. Verfahren zum Verriegeln eines Kraftübertragungselements an einem Formträger einer Spritzgießmaschine zur Verarbeitung von Kunststoffen und anderer plastifizierbarer Massen, wobei die Spritzgießmaschine aufweist
- einen stationären Formträger (10),
- einen relativ zum stationären Formträger (10) beweglichen Formträger (11, 11'), der zwischen sich und dem stationären Formträger (10) einen Formspannraum (R) zur Aufnahme von Spritzgießformen (M) bildet und entlang einer Schließrichtung (s-s) zum Schließen und Öffnen der Spritzgießform (M) beweglich ist,
- eine Formfahreinrichtung (13, 13') zum Überführen des beweglichen Formträgers (11, 11') in und außer Formschluss der zwischen den Formträgern (10, 11; 11') aufgenommenen Teile einer Spritzgießform (M),
- wenigstens ein Kraftübertragungselement, das mit einem der Formträger (11, 11'; 10) verbunden und an seinem von dem einen der Formträger (11, 11'; 10) beabstandeten Ende einen dem anderen der Formträger (10; 11, 11') zugeordneten für einen Wirkeingriff betätigbaren Abschnitt (14a) aufweist,
- wobei der betätigbare Abschnitt (14a) beim Formschluss der Teile der Spritzgießform (M) an dem anderen Formträger (10; 11, 11') formschlüssig mittels wenigstens einer Verriegelungseinrichtung (15) verriegelt wird und im so verriegelten Zustand eine über das Kraftübertragungselement wirkende Schließkraft aufgebracht wird,
- wobei das Kraftübertragungselement an dem anderen der Formträger (10; 11, 11') mittels wenigstens einer Spannzange (16, 116) schwimmend gelagert wird, die innerhalb der Verriegelungseinrichtung (15) zugleich mit einem Kolben (18, 118) einer Kolben-Zylinder-Einheit (17) verbunden ist, der die Schließkraft aufbringt,
**dadurch gekennzeichnet, dass** wenigstens ein Entriegelungselement (55, 155) zum Öffnen der Spannzange (16, 116) aus einem Zylinderraum (48, 148) beaufschlagt wird und dass bei einem stirnseitigen Anliegen des Entriegelungselements (55) an einem als Kraftübertragungselement ausgebildeten Holm (14) die Spritzgießform (M) aus diesem Zylinderraum (48, 148) mit Hochdruck geöffnet wird.

14. Verfahren nach Anspruch 13, **dadurch gekennzeichnet, dass** die Spannzange (16, 116) zwangsgeführt mit dem Kraftübertragungselement verriegelt wird und im verriegelten Zustand mittels des Kolbens (18, 118) ein Hochdruck zur Erzeugung der Schließkraft erzeugt wird.

15. Verfahren nach Anspruch 13 oder 14, **dadurch gekennzeichnet, dass** die Spannzange (16) mittels eines Druckstücks (39), das an wenigstens einem zentrisch zur Spannzange angeordneten Entriegelungselement (55) angeordnet ist, radial elastisch verformt wird.

16. Verfahren nach einem der Ansprüche 13 bis 15, **dadurch gekennzeichnet, dass** der Kolben (18) über die Spannzange (16) mit wenigstens einer Gleithülse (35) an einer zentrisch in der Spannzange (16) angeordneten, als Entriegelungselement ausgebildeten Entriegelungsstange (55) bewegt wird.

17. Verfahren nach Anspruch 15 oder 16, **dadurch gekennzeichnet, dass** das Entriegelungselement (55, 155) innerhalb einer als Lagerung ausgebildeten Gleithülse (35) oder einer als Lagerung ausgebildeten Anformung (125a) relativ zu einem Zylinderdeckel (25, 125) eines Zylinders (19, 119) für den Kolben (18, 118) beweglich geführt wird.

18. Verfahren nach einem der Ansprüche 13 bis 17, **dadurch gekennzeichnet,**
**dass** die am Formträger axial beweglich gelagerte Spannzange (16) im radial elastisch verformten, geöffneten Zustand eine Aufnahmeöffnung aufweist, in die der von der Spannzange (16) betätigbare Abschnitt (14a) eingeführt wird,
**dass** anschließend die radiale Verformung der Spannzange (16) aufgehoben wird und dadurch die Spannzange (16) aktiv schließend und lösbar formschlüssig mit dem Kraftübertragungselement verbunden wird (Fig. 3, 4),
oder alternativ
**dass** die am Formträger axial beweglich gelagerte Spannzange (16) im radial unverformten, geöffneten Zustand eine Aufnahmeöffnung aufweist, in die der von der Spannzange (16) betätigbare Abschnitt (14a) eingeführt wird,
**dass** anschließend die Spannzange (16) radial nach innen elastisch verformt wird und
dadurch die Spannzange (16) passiv schließend und lösbar formschlüssig mit dem Kraftübertragungselement verbunden wird (Fig. 6a, 6b).

19. Verfahren nach einem der Ansprüche 13 bis 18, **dadurch gekennzeichnet, dass** die Spannzange (116) mehrteilig ausgebildet ist und quer zur Schließrichtung (s-s) drehbeweglich gelagerte Spannelemente aufweist, die an einem Lagerelement (115) gelagert werden und die entweder mittels eines mit einem Entriegelungselement (155) verbundenen Betätigungselement (160) (Fig. 10-14) oder mittels einer Schiebehülse (170) (Fig. 15-18) in und außer Wirkeingriff mit dem Kraftübertragungselement überführt werden.

## Claims

1. A mould closing unit for an injection moulding machine for processing plastics and other plasticisable materials, comprising
- a stationary platen (10),
- a platen (11, 11') which is movable in relation to the stationary platen (10) and which forms a mould clamping space (R) between it and the stationary platen (10) for the purpose of receiving injection moulds (M), and which is movable along a closing direction (s-s), for the purpose of closing and opening the injection mould (M),
- a mould moving device (13, 13') for the purpose of moving the movable platen (11, 11') into and out of mould closure of the parts of an injection mould (M) which are received between the platens (10, 11; 11'),
- at least one force transmitting element, which is connected to one of the platens (11, 11'; 10) and, at its end spaced from the one of the platens (11, 11'; 10), has a portion (14a) that is associated with the other of the platens (10; 11, 11') and is actuable for an operative engagement,
- at least one locking device (15) that is associated with the other platen (10; 11, 11') and is movable into positive operative connection with the actuable portion (14a) when the parts of the injection mould (M) are in the mould closure position, for the purpose of applying a closing force,
- wherein the locking device (15) comprises at least one floating collet chuck (16, 116) that is movable into positive operative connection with the actuable portion (14a) for the purpose of locking the force transmitting element and the other of the platens (10; 11, 11') during mould closure, and at the same time is connected to at least one piston (18, 118) of a piston-cylinder unit (17) for the purpose of applying the closing force,
**characterised in that** the locking device (15) comprises at least one unlocking element (55) that is arranged in the collet chuck and a cylindrical chamber (48, 148) that is configured to put the unlocking element (55, 155) under load for the purpose of opening the collet chuck (16, 116), and
**in that** when the unlocking element (55, 155) abuts by its end face against a tie bar (14) configured as high-pressure opening of the injection mould (M) is configured to be generated from this cylindrical chamber (48, 148).

2. A mould closing unit according to Claim 1, **characterised in that** the collet chuck (16, 116) and the piston (18, 118) are parts of a self-contained assembly.

3. A mould closing unit according to Claim 1 or 2, **characterised in that** the collet chuck (16, 116) is forcibly lockable to the force transmitting element, and in the locked condition the piston (18, 118) is configured to generate a high pressure for the purpose of generating the closing force.

4. A mould closing unit according to one of the preceding claims, **characterised in that** the piston (18, 118) for applying the closing force is actuable in opposition to the force of resilient elements (spring 24, 124, 161).

5. A mould closing unit according to one of the preceding claims, **characterised in that** the unlocking element (55), in the locked position, comprises at its end adjacent to the positive operative connection a thrust piece (39) which, when it abuts against the collet chuck (16), is configured to cause a radial resilient deformation of the collet chuck.

6. A mould closing unit according to Claim 5, **characterised in that** the unlocking element (55, 155) is guided on a cylinder cover (25, 125) in a manner movable in relation thereto, within a sliding sleeve (35) configured as a mounting or within an integrally formed element (125a) configured as a mounting.

7. A mould closing unit according to one of the preceding claims, **characterised in that** the collet chuck (16), which is mounted such that it is axially movable on the platen by way of a cylinder (19) for the piston (18), comprises, in the radially resiliently deformed open condition, a receiving opening for the purpose of introducing a portion (14a) of the force transmitting element that is actuable by the collet chuck (Figs. 3, 4), or, in the radially undeformed open condition, comprises a receiving opening for the purpose of introducing a portion (14a) of the force transmitting element that is actuable by the collet chuck (16) (Fig. 6a, 6b).

8. A mould closing unit according to Claim 7, **characterised in that**, with active closing, the collet chuck (16), which comprises the receiving opening in the radially resiliently deformed open condition, engages, in a radially undeformed condition, by means of a toothing (16a) in a toothing of the actuable portion (14a) or, with passive closing, the collet chuck (16), which comprises the receiving opening in the radially undeformed open condition, engages, in a radially resiliently deformed condition, by means of a toothing (16a) in a toothing of the actuable portion (14a).

9. A mould closing unit according to one of Claims 5 to 8, **characterised in that** there is provided a sliding sleeve (20) that is radially attached to the unlocking rod (55) - which is in the form of an unlocking element - and that in a radially undeformed condition of the collet chuck (16), which comprises the receiving opening in the radially resiliently deformed open condition, comes into abutment with an abutment region (33) of the collet chuck (16), for the purpose of securing the collet chuck to prevent radial opening.

10. A mould closing unit according to Claim 7, **characterised in that**, in the radially resiliently deformed condition, the collet chuck (16), with passive closing, is configured to be fixed by means of a further piston (18') that acts on the end face of the collet chuck.

11. A mould closing unit according to one of the preceding claims, **characterised in that** there is provided, on the end face of the unlocking rod (55) and/or in a bore (10a) in the platen in which a tie bar (14) is configured to be received as force transmitting elements, a lubricant supply comprising at least one of the elements comprising a lubricant feed (50), a reservoir (51), a lubricant discharge point (52), a lubricant supply line (54) and a lubricant plate (55a).

12. A mould closing unit according to one of Claims 1 to 6, 11, **characterised in that** the collet chuck (116) takes a form in multiple parts and comprises clamping elements that are rotatably mounted transversely to the closing direction (s-s), wherein the clamping elements are mounted on a mounting element (115) and are configured to be brought in and out of operative engagement with the force transmitting element, either by means of an actuation element (160) (Figs. 10 - 14) connected to an unlocking element (155) or by means of a sliding sleeve (170) (Figs. 15 - 18).

13. A method for locking a force transmitting element to a platen of an injection moulding machine for processing plastics and other plasticisable materials, wherein the injection moulding machine comprises
- a stationary platen (10),
- a platen (11, 11') which is movable in relation to the stationary platen (10) and which forms a mould clamping space (R) between it and the stationary platen (10) for the purpose of receiving injection moulds (M), and which is movable along a closing direction (s-s), for the purpose of closing and opening the injection mould (M),
- a mould moving device (13, 13') for the purpose of moving the movable platen (11, 11') into and out of a mould closure position of the parts of an injection mould (M) that are received between the platens (10, 11; 11'),
- at least one force transmitting element, which is connected to one of the platens (11, 11'; 10) and, at its end spaced from the one of the platens (11, 11'; 10), comprises a portion (14a) that is associated with the other of the platens (10; 11, 11') and is actuable for an operative engagement,
- wherein, when the parts of the injection mould (M) are in the mould closure position with the other platen (10; 11, 11'), the actuable portion (14a) is positively locked by means of at least one locking device (15), and, in this locked condition, a closing force that acts by way of the force transmitting element is applied,
- wherein the force transmitting element is mounted in floating manner on the other of the platens (10; 11, 11') by means of at least one collet chuck (16, 116) that is at the same time connected within the locking device (15) to a piston (18, 118) of a piston-cylinder unit (17), which applies the closing force,
**characterised in that** at least one unlocking element (55, 155) is put under load from a cylindrical chamber (48, 148) for the purpose of opening the collet chuck (16, 116), and **in that** when the unlocking element (55, 155) abuts by its end face against a tie bar (14) configured as the force transmitting element the injection mould (M) is opened from this cylindrical chamber (48, 148) with high-pressure.

14. A method according to Claim 13, **characterised in that** the collet chuck (16, 116) is forcibly locked to the force transmitting element and a high pressure is generated in the locked condition by means of the piston (18, 118), for generating the closing force.

15. A method according to Claim 13 or 14, **characterised in that** the collet chuck (16) is radially resiliently deformed by means of a thrust piece (39), which is arranged on at least one unlocking element (55) arranged centrally in relation to the collet chuck.

16. A method according to one of Claims 13 to 15, **characterised in that** the piston (18) is moved by way of the collet chuck (16) with at least one sliding sleeve (35) on an unlocking rod (55) that is arranged centrally in the collet chuck (16) and takes the form of an unlocking element.

17. A method according to Claim 15 or 16, **characterised in that** the unlocking element (55, 155) is guided movably within a sliding sleeve (35) that takes the form of a mounting, or within an integrally formed element (125a) that takes the form of a mounting, relative to a cylinder cover (25, 125) of a cylinder (19, 119) for the piston (18, 118).

18. A method according to one of Claims 13 to 17, **characterised**
**in that**, in the radially resiliently deformed, open condition the collet chuck (16) that is mounted axially movably on the platen comprises a receiving opening into which the portion (14a) actuable by the collet chuck (16) is introduced,
**in that** the radial deformation of the collet chuck (16) is then reversed and as a result the collet chuck (16) is connected, with active closing and detachably with positive engagement, to the force transmitting element (Figs. 3, 4),
or alternatively,
**in that**, in the radially undeformed, open condition, the collet chuck (16) that is mounted axially movably on the platen comprises a receiving opening into which the portion (14a) actuable by the collet chuck (16) is introduced,
**in that** the collet chuck (16) is then radially inwardly resiliently deformed and as a result the collet chuck (16) is connected, with passive closing and detachably with positive engagement, to the force transmitting element (Figs. 6a, 6b).

19. A method according to one of Claims 13 to 18, **characterised in that** the collet chuck (116) takes a form in multiple parts and comprises clamping elements that are rotatably mounted transversely to the closing direction (s-s), wherein the clamping elements are mounted on a mounting element (115) and are brought into and out of operative engagement with the force transmitting element either by means of an actuation element (160) connected to an unlocking element (155) (Figs. 10 - 14) or by means of a sliding sleeve (170) (Figs. 15 - 18).

## Revendications

1. Unité de fermeture de moule pour une machine de moulage par injection, pour la transformation de matières plastiques et d'autres masses plastifiables, comportant
- un support de moule stationnaire (10),
- un support de moule (11, 11') mobile par rapport au support de moule stationnaire (10), qui forme entre lui-même et le support de moule stationnaire (10) un espace de serrage de moule (R) pour la réception de moules d'injection (M) et est mobile le long d'une direction de fermeture (s-s) pour l'ouverture et la fermeture du moule d'injection (M),
- un dispositif de déplacement de moule (13, 13') pour le transfert du support de moule mobile (11, 11') pendant et après la fermeture des pièces d'un moule d'injection (M) reçues entre les supports de moule (10, 11 ; 11'),
- au moins un élément de transmission de force qui est relié à l'un des supports de moule (11, 11' ; 10) et présente à son extrémité éloignée dudit support de moule (11, 11' ; 10) une section (14a) actionnable associée à l'autre support de moule (10 ; 11, 11') pour une mise en prise active,
- au moins un dispositif de blocage (15) associé à l'autre support de moule (10 ; 11, 11') et qui peut être transféré, lors de la fermeture des pièces du moule d'injection (M) pour l'application d'une force de fermeture avec la section actionnable (14a), en liaison par forme active,
- le dispositif de fermeture (15) comprenant au moins une pince de serrage (16, 116) montée pivotante, qui peut être transférée, pour le blocage d'un élément de transmission de force et de l'autre des supports de moule (10 ; 11, 11') lors de la fermeture du moule avec la section actionnable (14a) en liaison par forme active et qui est aussi reliée à au moins un piston (18, 118) d'une unité de cylindre à piston (17) pour l'application de la force de fermeture,
**caractérisée en ce que** le dispositif de blocage (15) comprend au moins un élément de déblocage (55) disposé dans la pince de serrage et une chambre de cylindre (48, 148) pouvant alimenter l'élément de déblocage (55, 155) pour l'ouverture de la pince de serrage (16, 116) et **en ce que** lorsque l'élément de déblocage (55, 155) est disposé du côté frontal sur la barre (14) à partir de la chambre de cylindre (48, 148), une ouverture sous pression élevée du moule d'injection (M) peut être opérée.

2. Unité de fermeture de moule selon la revendication 1 ou 2, **caractérisée en ce que** la pince de serrage (16, 116) et le piston (18, 188) sont des pièces d'un assemblage fermé en soi.

3. Unité de fermeture de moule selon la revendication 1 ou 2, **caractérisée en ce que** la pince de serrage (16, 116) peut être bloquée de force avec l'élément de transmission de force et, à l'état bloqué, une pression élevée peut être produite au moyen du piston (18, 118) pour la production de la force de fermeture.

4. Unité de fermeture de moule selon l'une des revendications précédentes, **caractérisée en ce que** le piston (18, 118) est actionnable pour l'application de la force de fermeture contre la force d'éléments élastiques (ressort 24, 124, 161).

5. Unité de fermeture de moule selon l'une des revendications précédentes, **caractérisée en ce que** l'élément de déblocage (55) présente, lors du blocage à son extrémité adjacente à la liaison par forme active, une pièce de pression (39) exerçant lors du placement sur la pince de serrage (16) une déformation élastique de la pince de serrage.

6. Unité de fermeture de moule selon la revendication 5, **caractérisé en ce que** l'élément de déblocage (55, 155) est guidé à l'intérieur d'un coulisseau (35) réalisé sous forme de fixation ou un ensemble réalisé sous forme de fixation (125a) de façon mobile par rapport à un couvercle de cylindre (25, 125) et sur celui-ci.

7. Unité de fermeture de moule selon l'une des revendications précédentes, **caractérisée en ce que** la pince de serrage (16) montée de façon mobile axialement sur le support de moule par l'intermédiaire d'un cylindre (19) pour le cylindre (18) présente, à l'état ouvert déformé élastiquement radialement, une ouverture de réception pour l'introduction d'une section (14a) de l'élément de transmission de force actionnable par la pince de serrage (Fig. 3,4) ou, à l'état ouvert non déformé radialement (Fig. 6a, 6b) une ouverture de réception pour l'introduction d'une section (14a) de l'élément de transmission de force actionnable par la pince de serrage (16).

8. Unité de fermeture de moule selon la revendication 7, **caractérisée en ce que** la pince de serrage (16), qui présente à l'état ouvert, déformé élastiquement radialement, l'ouverture de réception, vient en prise en fermant activement, dans un état non déformé radialement, avec une denture (16a) dans une denture de la section actionnable (14a), ou la pince de serrage (16), qui comporte à l'état ouvert non déformé radialement, l'ouverture de réception, vient en prise en fermant passivement, dans un état déformé élastiquement radialement, avec une denture (16a) dans la denture de la section actionnable (14a).

9. Unité de fermeture de moule selon l'une des revendications 5 à 8, **caractérisée en ce qu'**un manchon coulissant (20) fixé radialement est prévu sur la barre de déblocage (55) réalisée sous forme d'élément de déblocage, lequel manchon comporte, dans un état non déformé radialement de la pince de serrage (16), l'ouverture de réception à l'état ouvert déformé radialement élastiquement, vient en butée contre une zone de butée (33) de la pince de serrage (16) pour la sécurisation de la pince de serrage contre une ouverture radiale.

10. Unité de fermeture de moule selon la revendication 7, **caractérisée en ce que** la pince de serrage (16) à fermeture passive peut être fixée au moyen d'un autre piston (18') venant en contact frontalement avec la pince de serrage à l'état déformé élastiquement radialement.

11. Unité de fermeture de moule selon l'une des revendications précédentes, **caractérisée en ce que**, frontalement sur la barre de déblocage (55) et/ou dans un perçage (10a) du support de moule, dans lequel une barre (14) peut être reçue en tant qu'élément de transmission de force, une alimentation en lubrifiant est prévue, laquelle comporte au moins l'un des éléments comprenant une amenée de lubrifiant (50), un réservoir (51), une sortie de lubrifiant (52), une conduite de lubrifiant (54), une plaque de lubrification (55a).

12. Unité de fermeture de moule selon l'une des revendications 1 à 6, 11, **caractérisée en ce que** la pince de serrage (116) est réalisée en plusieurs pièces et comporte perpendiculairement à la direction de fermeture (s-s) des éléments de serrage montés pivotants, qui sont montés sur un élément de fixation (115) et qui peuvent être transférés, soit au moyen d'un élément d'actionnement (160) (Fig. 10-14) relié à un élément de déblocage (155), soit au moyen d'un manchon coulissant (170) (Fig. 15-18), en prise active ou hors prise active avec un élément de transmission de force.

13. Procédé de blocage d'un élément de transmission de force sur un support de moule d'une machine de moulage par injection pour la transformation de matières plastiques et d'autres masses plastifiables, cette machine de moulage par injection présentant :
- un support de moule stationnaire (10),
- un support de moule (11, 11') mobile par rapport au support de moule stationnaire (10), qui forme entre lui-même et le support de moule stationnaire (10), un espace de serrage de moule (R) pour la réception de moules d'injection (M) et qui est mobile le long d'une direction de fermeture (s-s) pour l'ouverture et la fermeture du moule d'injection (M),
- un dispositif de déplacement de moule (13, 13') pour le transfert du support de moule mobile (11, 11') pendant et après la fermeture des pièces d'un moule d'injection (M) reçues entre les supports de moule (10, 11 ; 11'),
- au moins un élément de transmission de force qui est relié à l'un des supports de moule (11, 11'; 10) et présente à son extrémité éloignée dudit support de moule (11, 11' ; 10) une section actionnable (14a) associée à l'autre des supports de moule (10 ; 11, 11') pour une mise en prise active,
- la section actionnable (14a) étant bloquée lors de la fermeture des pièces du moule d'injection (M) sur l'autre support de moule (10 ; 11, 11') par complémentarité de forme au moyen d'au moins un dispositif de blocage (15) et dans un tel état bloqué une force de fermeture agissant sur l'élément de transmission de force étant appliquée,
- l'élément de transmission de force étant monté pivotant sur l'autre des supports de moule (10 ; 11, 11') au moyen d'au moins une pince de serrage (16, 116), laquelle est reliée à l'intérieur du dispositif de blocage (15) en même temps à un piston (18, 118) d'une unité de cylindre à piston (17), laquelle applique la force de fermeture,
**caractérisé en ce qu'**au moins un élément de déblocage (55, 155) est actionné pour l'ouverture de la pince de serrage (16, 116) à partir de la chambre de cylindre (48, 188) et **en ce que** lors du placement frontal de l'élément de déblocage (55) sur une barre (14) réalisée sous forme d'élément de transmission de force, le moule d'injection (M) est ouvert sous pression élevée à partir de cette chambre de cylindre (48, 148).

14. Procédé selon la revendication 13, **caractérisé en ce que** la pince de serrage (16, 116) est bloquée de force avec l'élément de transmission de force et, à l'état bloqué, une pression élevée est produite au moyen du piston (18, 118) pour la production de la force de fermeture.

15. Procédé selon la revendication 13 ou 14, **caractérisé en ce que** la pince de serrage (16) est déformée élastiquement radialement au moyen d'une pièce de pression (39) qui est disposée sur au moins un élément de déblocage (55) disposé centralement sur la pince de serrage.

16. Procédé selon l'une des revendications 13 à 15, **caractérisé en ce que** le piston (18) est déplacé par l'intermédiaire de la pièce d'extension (16) avec au moins un coulisseau (35) sur une barre de déblocage (55) disposée centralement dans la pièce d'extension (16) et réalisée sous forme d'élément de déblocage.

17. Procédé selon la revendication 15 ou 16, **caractérisé en ce que** l'élément de déblocage (55, 155) est guidé dans son déplacement relativement à un couvercle de cylindre (25, 125) d'un cylindre (19, 119) pour le piston, à l'intérieur d'un coulisseau (35) réalisé sous forme de fixation ou d'un évidement (125a) réalisé sous forme de fixation.

18. Procédé selon l'une des revendications 13 à 17, **caractérisé en ce que** la pince de serrage (16) montée mobile axialement sur le support de moule présente à l'état ouvert déformé élastiquement radialement, une ouverture de réception dans laquelle la section actionnable (14a) par la pince de serrage (16) est introduite,
**en ce qu'**ensuite, la déformation radiale de la pince de serrage (16) est supprimée et ainsi la pince de serrage (16) est reliée en fermant activement et par complémentarité de forme, de manière amovible, à l'élément de transmission de force (Fig. 3, 4)
ou en alternative,
**en ce que** la pince de serrage (16) montée mobile axialement sur le support de moule présente, à l'état ouvert, non déformé radialement, une ouverture de réception, dans laquelle la section (14a) actionnable par la pince de serrage (16) est introduite,
**en ce qu'**ensuite, la pince de serrage (16) est déformée élastiquement radialement vers l'intérieur et ainsi, la pince de serrage (16) est reliée en fermant passivement et par complémentarité de forme, de manière amovible, à l'élément de transmission de force (Fig. 6a, 6b).

19. Procédé selon l'une des revendications 13 à 18, **caractérisé en ce que** la pince de serrage (116) est réalisée en plusieurs pièces et présente des éléments de serrage montés tournants perpendiculairement à la direction de fermeture (s-s), lesquels sont montés sur un élément de montage (115) et sont transférés, soit au moyen d'un élément d'actionnement (160) (Fig. 10-14) relié à un élément de déblocage (155), soit au moyen d'un manchon glissant (170) (Fig. 15-18) en prise active et hors prise active avec l'élément de transmission de force.
